(19) **Europäisches Patentamt / European Patent Office / Office européen des brevets**

(11) **EP 4 446 792 A1**

(12) **EUROPEAN PATENT APPLICATION**
published in accordance with Art. 153(4) EPC

(43) Date of publication:
**16.10.2024 Bulletin 2024/42**

(21) Application number: **22904627.1**

(22) Date of filing: **06.12.2022**

(51) International Patent Classification (IPC):
*G02B 9/12* (2006.01)    *G02B 13/00* (2006.01)
*G03B 17/12* (2021.01)    *H04N 23/00* (2023.01)
*B60R 11/04* (2006.01)

(52) Cooperative Patent Classification (CPC):
**B60R 11/04; G02B 9/12; G02B 13/00; G03B 17/12; H04N 23/00**

(86) International application number:
**PCT/KR2022/019717**

(87) International publication number:
**WO 2023/106797 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 06.12.2021  KR 20210173156
06.12.2021  KR 20210173157

(71) Applicant: **LG INNOTEK CO., LTD.**
**Seoul 07796 (KR)**

(72) Inventors:
• **RYU, Yong Hak**
  **Seoul 07796 (KR)**
• **KIM, Kyu Jin**
  **Seoul 07796 (KR)**
• **PARK, Jin Young**
  **Seoul 07796 (KR)**

(74) Representative: **DREISS Patentanwälte PartG mbB**
**Friedrichstraße 6**
**70174 Stuttgart (DE)**

(54) **OPTICAL SYSTEM AND CAMERA MODULE COMPRISING SAME**

(57)    An optical system according to an embodiment of the present invention may comprise: a first lens having positive (+) refractive power; a second lens; and a third lens having a negative (+) refractive power, wherein: the first to third lenses are successively arranged from an object side to an image side; the first to third lenses are made of a plastic material; and the center thickness of each of the first to third lenses in the optical axis direction is greater than 0.9mm.

【FIG. 4】

EP 4 446 792 A1

**Description**

[Technical Field]

The present embodiments are directed to an optical system having improved optical performance and a camera module comprising the same.

[Background Arts]

An Advanced Driving Assistance System (ADAS) is an advanced driver assistance system intended to assist the driver in driving and consists of sensing the situation in front of the vehicle, making a situational judgment based on the sensed results, and controlling the behavior of the vehicle based on the situational judgment. For example, an ADAS sensor device detects a vehicle in front of it and recognizes its lane. Then, when the target lane, target speed, and target in front of the vehicle are determined, the electrical stability control (ESC), engine management system (EMS), motor-driven power steering (MDPS), etc. of the vehicle are controlled. For example, ADAS can be implemented as an automatic parking system, low-speed city driving assistance system, blind spot warning system, etc.

Sensor devices for detecting the situation in front of the vehicle in ADAS include GPS sensors, laser scanners, forward-facing radar, Lidar, etc., and, most commonly, cameras for photographing the front, rear, and sides of the vehicle.

Such cameras may be disposed on the exterior or interior of the vehicle to detect the surrounding situation of the vehicle. Further, the cameras may be disposed inside the vehicle to detect the situation of the driver and passengers. For example, the camera may film the driver from a position adjacent to the driver, and may detect the driver's health status, whether the driver is drowsy, whether the driver is intoxicated, etc. Further, the camera may image the passenger from a position adjacent to the passenger and may detect whether the passenger is sleeping, in good health, or otherwise, and may provide the driver with information about the passenger.

In particular, the most important element for obtaining an image from a camera is an imaging lens that converges the image. Recently, interest in high performance, such as high definition and high resolution, has been increasing, and research is being conducted on optical systems comprising a plurality of lenses to achieve the same. However, there is a problem that the characteristics of the optical system change when the camera is exposed to a harsh environment, such as, but not limited to, high temperature, low temperature, moisture, high humidity, etc. outside or inside a vehicle. In this case, it is difficult for the camera to obtain excellent optical properties and aberration characteristics uniformly.

In addition, since the automotive camera module is exposed to the outside, the shooting quality may be reduced by moisture and temperature. In particular, the optical properties of the camera module change depending on the ambient temperature and the material of the lens.

Therefore, there is a need for new optical systems and cameras that can solve the above problems.

[Description of Invention]

[Technical Subjects]

The present embodiments seek to provide optical systems and camera modules with improved optical properties.

Further, the present embodiments seek to provide optical systems and camera modules that can provide excellent optical properties in environments with low or high temperatures.

Further, the present embodiments seek to provide optical systems and camera modules that can prevent or minimize changes in optical properties over a range of temperatures.

Further, the present embodiments may provide a camera system that can predict and compensate for changes in the focal length of a lens in a camera module.

Further, the present embodiments may provide a camera system capable of predicting and adjusting the optical axis distance of at least one lens in the camera module in response to a change in temperature.

Further, the present embodiments may provide a control system for controlling a camera module that is applied to a device or structure that is subject to large temperature changes.

[Technical Solution]

In order to solve the aforementioned subjects, there may be provided an optical system according to an embodiment of the present invention, the optical system comprising:

a first lens having positive (+) refractive power;

a second lens; and
a third lens having a negative (+) refractive power, wherein:

the first to third lenses are successively arranged from an object side to an image side;
the first to third lenses are made of a plastic material; and
the center thickness of each of the first to third lenses in the optical-axis direction is greater than 0.9mm.

In order to solve the aforementioned subjects, there may be provided an optical system according to another embodiment of the present invention, the optical system, comprising:

a first lens having a positive (+) refractive power;
a second lens; and
a third lens having a positive (+) refractive power, wherein the first to third lenses are arranged sequentially from the object side to the upper side; and satisfying the following conditional expression:

<conditional expression>

100 degrees < |L3S2_max slope angle| < 120 degrees,

wherein, L3S2_max slope angle means a maximum value of the angles that a tangent line tangential to the image side surface of the third lens makes with a line perpendicular to the optical axis.

Preferably, but not necessarily, the refractive index of the first lens may be greater than the refractive index of the second lens.
Preferably, but not necessarily, the optical system may satisfy the following conditional expression:

<conditional expression>

6mm < TTL < 8mm,

wherein, TTL means the distance along the optical axis from the object side surface of the first lens to an image surface of the image sensor.
Preferably, but not necessarily, the optical system may satisfy the following conditional expression:

<conditional expression>

1.6 < n1 < 1.8,

wherein, n1 means the refractive index of the first lens.
Preferably, but not necessarily, the optical system may satisfy the following conditional expression:

<conditional expression>

1.8 < Fno < 2.2,

wherein, Fno in the above conditional expression means the F-number of the optical system.
Preferably, but not necessarily, the optical system may satisfy the following conditional expression:

<conditional expression>

v1 < v2,

wherein, v1 means the Abbe number of the first lens, and v2 means the Abbe number of the second lens.

Preferably, but not necessarily, the optical system may satisfy the following conditional expression:

<Conditional expression>

25 degrees < FOV < 35 degrees,

wherein, FOV means the field of view of the optical system.

Preferably, but not necessarily, the optical system may satisfy the following conditional expression:

<conditional expression>

10 < v1 < 20,

wherein, v1 means the Abbe number of the first lens.

Preferably, but not necessarily, the optical system may comprise: an image sensor; and may satisfy the following conditional expression:

< conditional expression>

2 mm < ImgH < 4 mm,

wherein, ImgH means the overall diagonal length of the image sensor in mm.

Preferably, but not necessarily, the center thickness of the second lens in the optical axis may be greater than the center thickness of the third lens.

In order to solve the aforementioned subjects, there may be provided an optical system according to still another embodiment of the present invention, the optical system comprising:

a first lens having a positive (+) refractive power;
a second lens; and
a third lens having a positive (-) refractive power, wherein the first to third lenses are sequentially disposed from an object side to an image side, and include an aperture disposed between the first lens and the second lens, and wherein the refractive index of the first lens may be smaller than the refractive index of the second lens.

In order to solve the aforementioned subjects, there may be provided an optical system according to still another embodiment of the present invention, the optical system comprising:

a first lens having a positive (+) refractive power;
a second lens; and
a third lens having a positive (-) refractive power, wherein the first to third lenses are arranged sequentially from the object side to the upper side, and include an aperture disposed between the first lens and the second lens, and the refractive index of the second lens may be greater than the refractive index of the third lens.

Preferably, but not necessarily, the optical system may satisfy the following conditional expression:

<conditional expression>

v2 < v1,

wherein, v1 means the Abbe number of the first lens and v2 means the Abbe number of the second lens.

Preferably, but not necessarily, the optical system may satisfy the following conditional expression:

1.8 < Fno < 2.2,

wherein, Fno means the F-number of the optical system.

Preferably, but not necessarily, the optical system may satisfy the following conditional expression:

<conditional expression>

1.5 < n1 < 1.6,

wherein, n1 means the refractive index of the first lens.

Preferably, but not necessarily, the optical system can satisfy the following conditional expression:

<conditional expression>

1.6 < n2 < 1.7,

wherein, n2 means the refractive index of the second lens.

Preferably, but not necessarily, the optical system may satisfy the following conditional expression:

<conditional expression>

50 < v1 < 60,

wherein, v1 means the Abbe number of the first lens.

Preferably, but not necessarily, the optical system may satisfy the following conditional expression:

<conditional expression>

10 < v2 < 20,

wherein, v2 means the Abbe number of the second lens.

Preferably, but not necessarily, the thickness of the second lens in the optical axis may be greater than the thickness of the first lens.

Preferably, but not necessarily, the thickness of the first lens in the optical axis may be greater than the thickness of the third lens.

Preferably, but not necessarily, the thickness of the first lens in the optical axis may be greater than the distance between the first lens and the second lens.

[Advantageous Effects]

The optical system and camera module according to the present embodiments may have improved optical properties.

Specifically, in an optical system according to an embodiment, a plurality of lenses may have a set shape, refractive power, focal length, thickness, etc. to have improved distortion characteristics and aberration characteristics. Accordingly, the optical system and camera module according to the embodiments can provide high-resolution, high-quality images within a set angle of view.

Furthermore, the optical system and camera module according to the present embodiments can operate over a wide range of temperatures. More specifically, the optical system may comprise first to third lenses made of plastic material. Each of the first to third lenses may have a set refractive power. Accordingly, the first to third lenses can compensate each other even when the focal length of each lens changes due to a change in refractive index with a change in temperature. In other words, the optical system can effectively perform an allocation of refractive power in a temperature range from low temperature (about -40°C) to high temperature (about 85°C), and can prevent or minimize a change in optical properties in a temperature range from low temperature (about -40°C) to high temperature (85°C). Thus, the optical system and camera module according to the present embodiments can maintain improved optical properties over a wide range of temperatures.

Further, it can also compensate for changes in back focal length (BFL) within the camera module. Further, the at least one lens may be moved in the optical axis direction in response to temperature changes to minimize performance changes. Further, by detecting ambient temperature information of the camera module from an internal or external device of the vehicle, the distance between the at least one lens and the sensor can be adjusted within a predictable range for each temperature. This can minimize temperature-dependent performance changes of the camera module.

Furthermore, the optical system and the camera module according to the present embodiment can satisfy the angle of view set by the at least one lens and implement excellent optical characteristics. As a result, the optical system can be provided with a slimmer and more compact structure. Accordingly, the optical system and camera module can be provided in various applications and devices, and can have excellent optical properties even in a harsh temperature environment, such as inside a vehicle at high temperatures in summer.

[Brief Description of Drawings]

FIG. 1 is a top view of a vehicle with a camera module or optical system according to an exemplary embodiment.
FIGS. 2 and 3 are views of the interior of a vehicle applied with a camera module or optical system according to an exemplary embodiment.
FIG. 4 is a block diagram of an optical system according to the first embodiment.
FIG. 5 is a graph of an aberration diagram of an optical system according to the first embodiment in a low temperature (-40°C) environment.
FIG. 6 is a graph of an aberration diagram of an optical system according to the first embodiment in a room temperature (20°C) environment.
FIG. 7 is a graph of an aberration diagram of an optical system according to the first embodiment in a high temperature (85°C) environment.
FIG. 8 is a block diagram of an optical system according to a second embodiment.
FIG. 9 is a graph of an aberration diagram of an optical system according to the second embodiment in a low temperature (-40°C) environment.
FIG. 10 is a graph of an aberration diagram of an optical system according to the second embodiment in a room temperature (20°C) environment.
FIG. 11 is a graph of an aberration diagram of an optical system according to the second embodiment in a high temperature (85°C) environment.
FIG. 12 is a diagram illustrating a camera system of the present embodiment.
FIGS. 13 (A), (B) are drawings illustrating the focal length variations of a lens within a camera module according to temperatures in the camera module.
FIG. 14 is a side cross-sectional view illustrating an exemplary camera module in a camera system according to a present embodiment.
FIG. 15 is a table illustrating a lens correction rate based on temperature stored in storage of a camera system according to a present embodiment.
FIG. 16 is a graph illustrating a lens correction rate based on temperatures in a camera system according to a present embodiment.
FIG. 17 is a table illustrating a temperature compensation rate according to a reference BFL stored in the storage of the camera system according to a present embodiment.
FIG. 18 is a graph illustrating a focal length correction method according to temperature in a camera system of a present embodiment.
FIG. 19 is a block diagram to illustrate some terms in an optical system according to a present embodiment.

[Best Mode]

Hereinafter, exemplary embodiments of the present invention will be described in detail with reference to the accompanying drawings.

However, it should be noted that the technical ideas of the present invention should not be construed as limited to some of the explained exemplary embodiments but may be embodied in mutually different various shapes, and one or more elements may be selectively coupled or substituted among exemplary embodiments as long as within the scope of technical concept of the present invention.

Furthermore, terms (including technical and scientific terms) used in the embodiments of the present invention, unless expressly specifically defined and described, are to be interpreted in the sense in which they would be understood by a person of ordinary skill in the art to which the present invention belongs, and commonly used terms, such as dictionary-defined terms, are to be interpreted in light of their contextual meaning in the relevant art.

Furthermore, the terms used in the embodiments of the invention are intended to describe the embodiments and are not intended to limit the invention.

In this specification, the singular may include the plural unless the context otherwise requires, and references to "at least one (or more) of A and (or) B and C" may include one or more of any combination of A, B, and C that may be assembled.

In addition, the terms first, second, A, B, (a), (b), and the like may be used to describe components of embodiments of the invention. Such terms are intended only to distinguish one component from another, and are not intended to limit the nature or sequence or order of such components by such terms.

Furthermore, when a component is described as "connected," "coupled," or "attached" to another component, it can include cases where the component is "connected," "coupled," or "attached" to the other component directly, as well as cases where the component is "connected," "coupled," or "attached" to another component that is between the component and the other component.

Furthermore, when described as being formed or disposed "above" or "below" each component, "above" or "below" includes not only when two components are in direct contact with each other, but also when one or more other components are formed or disposed between the two components. Furthermore, when expressed as "above" or "below", it may include the meaning of upward as well as downward with respect to a single component.

Further, "convex face of the lens" may mean that the face of the lens in the optical axis region has a convex shape, and "concave face of the lens" may mean that the face of the lens in the optical axis region has a concave shape.

Further, "object side surface" may mean the surface of the lens facing the object side with respect to the optical axis, and "sensor side surface" may mean the surface of the lens facing the image sensor with respect to the optical axis. The "object side surface" may be the "object surface". "Sensor side surface" may be "image side surface".

Further, the vertical direction may mean a direction perpendicular to the optical axis, and the end of the lens or lens face may mean the extreme distal end of the effective region of the lens through which incident light passes.

Further, the center thickness of the lens may mean a length in the optical axis of the lens between the object side surface and the sensor side surface.

Further, the size of the clear aperture of the lens face may have a measurement error of up to $\pm 0.4$ mm or the like depending on the measurement method or the like.

Further, in an embodiment, a low temperature may mean a specific temperature (-40°C) or a temperature range of about -40°C to about 30°C, and a room temperature may mean a specific temperature (20°C) or a temperature range of about 18°C to about 30°C. Further, high temperature may mean a specific temperature (85°C) or a temperature range of about 80°C to about 105°C.

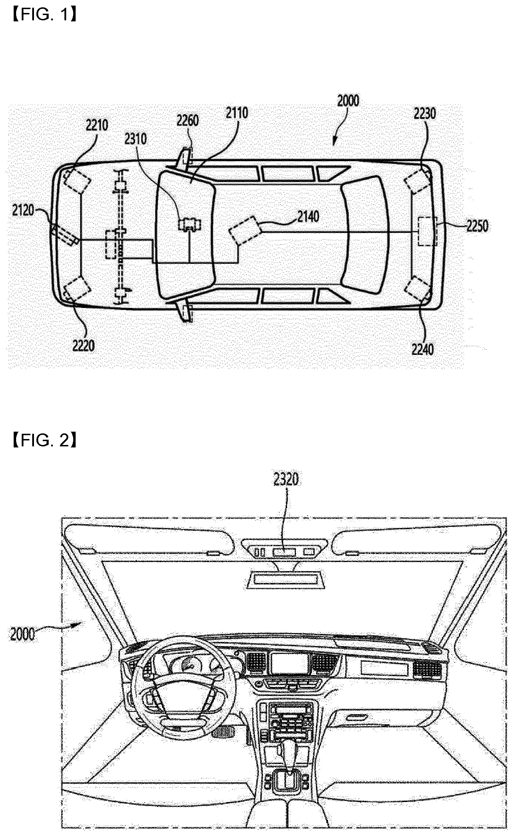

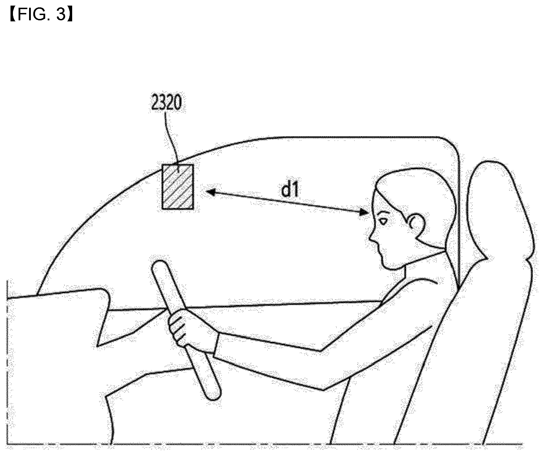

FIG. 1 is a top view of a vehicle with a camera module or optical system according to an exemplary embodiment, and FIGS. 2 and 3 are views of the interior of a vehicle applied with a camera module or optical system according to an exemplary embodiment.

Referring first to FIG. 1, an automotive camera system according to an embodiment includes an image generation unit (2110), a first information generation unit (2120), second information generation units (2210, 2220, 2230, 2240, 2250, 2260), and a controller (2140).

The image generation unit (2110) may include at least one first camera module (2310) disposed on an exterior or interior of a vehicle (2000), and may generate a front view of the vehicle (2000). In addition, the image generation unit (2110) may use a first camera module (2310) to generate an ambient image of the vehicle (2000) by photographing the surroundings of the vehicle (2000) in one or more directions in addition to the front of the vehicle (2000). Here, the front image and the peripheral image may be digital images, and may include color images, black and white images, and infrared images. Further, the forward view and the surrounding view may include still images and video. The image generation unit (2110) may provide the foreground image and the surrounding image to the controller (2140).

Next, the first information generation unit (2120) may include at least one radar and/or camera disposed on the vehicle (2000), and may detect the front of the vehicle (2000) to generate first detection information. Specifically, the first information generation unit (2120) may be disposed on the vehicle (2000) and may generate the first detection information by detecting, for example, the position and speed of vehicle (2000) located in front of the vehicle (2000), the presence and location of pedestrians, and the like.

The first detection information generated by the first information generation unit (2120) may be used to control the vehicle (2000) to maintain a constant distance between the vehicle (2000) and a vehicle in front of it, and to increase the driving stability of the vehicle (2000) in certain predetermined cases, such as when the driver wishes to change the driving lane of the vehicle (2000) or when parking in reverse. The first information generation unit (2120) may provide the first detection information to the controller (2140).

Then, the second information generation units (2210, 2220, 2230, 2240, 2250, 2260) may generate second detection information by detecting each side of the vehicle (2000) based on the forward image generated by the image generation unit (2110) and the first detection information generated by the first information generation unit (2120). Specifically, the second information generation units (2210, 2220, 2230, 2240, 2250, 2260) may include at least one radar and/or camera disposed on the vehicle (2000), and may detect or image the position and speed of vehicles located on the sides of the vehicle (2000). Here, the second information generation units (2210, 2220, 2230, 2240, 2250, 2260) may be disposed at each of the front two corners, the side mirrors, and the rear center and rear two corners of the vehicle (2000).

Further, referring to FIGS. 2 and 3, the image generation unit (2110) may include at least one second camera module (2320) disposed in the interior of the vehicle (2000). The second camera module (2320) may be disposed adjacent to the driver and passengers. For example, the second camera module (2320) may be disposed a first distance (d1) away from the driver and passenger to generate an image of the interior of the vehicle (2000). In this case, the first distance (d1) may be about 500 mm or more. More specifically, the first distance (d1) may be about 600 mm or more. Further, the second camera module (2320) may have a field of view (FOV) of about 55 degrees or more.

The image generation unit (2110) may use the second camera module (2320) to generate an interior image of the vehicle (2000) by photographing the driver and/or passengers inside the vehicle (2000). The interior image of the vehicle may be a digital image, and may include color images, black and white images, and infrared images. Further, the interior image may include still images and video. The image generation unit (2110) may provide the interior image of the vehicle (2000) to the controller (2140).

The controller (2140) may provide information to an occupant of the vehicle (2000) based on the information provided by the image generation unit (2110). For example, based on the information provided by the image generation unit (2110), the controller (2140) may detect whether the driver is in good health, drowsy, intoxicated, etc. and may provide corresponding instructions, warnings, etc. to the driver. Also, based on the information provided by the image generation unit (2110), a passenger's sleep status, health status, etc. can be detected and information can be provided to the driver and/or the passenger.

Such an automotive camera system may include camera modules having an optical system (1000) according to the embodiments described below, and may use information acquired through the front, rear, each side, or corner areas of the vehicle (2000) to provide or process information to a user to protect the vehicle (2000) and objects from automated driving or peripheral safety. In addition, camera modules may also be disposed inside the vehicle (2000) to provide various information to the driver and passengers, i.e., at least one of the first camera module (2310) and the second camera module (2320) may include the optical system (1000) to be described later.

The optical system of the camera modules according to the present embodiment may be mounted in a plurality in a vehicle for safety regulations, enhancement of autonomous driving capabilities, and increased convenience. In addition, the optical system of the camera module may be applied in the vehicle as a component for controls such as lane keeping assistance system (LKAS), lane departure warning system (LOWS), and driver monitoring system (DMS). These automotive camera modules can secure the reliability of automotive components by providing modules that are capable of stable optical performance despite changes in ambient temperature and are competitively priced.

Hereinafter, the optical system according to the first embodiment will be described in detail.

The optical system (1000) according to a first exemplary embodiment may include a plurality of lenses (100, 200, 300) and an image sensor (600). More specifically, the optical system (1000) according to the first embodiment may include more than two lenses. For example, the optical system (1000) may include a three-element lens, and may include a first lens (100), a second lens (200), a third lens (300), and an image sensor (600) disposed sequentially from the object side to the sensor side. The first to third lenses (100, 200, 300) may be sequentially disposed along the optical axis (OA) of the optical system (1000).

In this case, light corresponding to information about an object may pass through the first lens (100), second lens (200), and third lens (300) and be incident on the image sensor 600.

Each of the plurality of lenses (100, 200, 300) may include an effective region and an ineffective region. The effective region may be the region through which light incident on each of the first to third lenses (100, 200, 300) passes. In other words, the effective region may be the region through which the incident light is refracted to produce optical properties. The effective region may be a clear aperture region.

The ineffective region can be placed around the perimeter of the effective region. The ineffective region may be an area where no light is incident, i.e., the ineffective region may be an area that is independent of the optical properties. Further, the ineffective region may be an area fixed to a barrel (not shown) that houses the lens. The ineffective region may be a non-clear aperture region.

The image sensor (600) may detect light. More specifically, the image sensor (600) may detect light that has passed sequentially through a plurality of lenses, more specifically, the first to third lenses (100, 200, 300). The image sensor (600) may include an element capable of detecting incident light, such as a charge coupled device (CCD) or a

0

0

complementary metal oxide semiconductor (CMOS).

The image sensor (600) may include a plurality of pixels having a set size. For example, the image sensor (600) may have a pixel size of about 3 $\mu$m. The image sensor (600) can detect light of a set wavelength. For example, the image sensor (600) may detect infrared ray (IR) light. More specifically, the image sensor (600) can detect near infrared ray light below about 1500 nm. For example, the image sensor may detect light in a wavelength band from about 880 nm to about 1000 nm.

The optical system (1000) according to the first exemplary embodiment may further include a cover glass (400) and a filter (500).

The cover glass (400) may be disposed between the plurality of lenses (100, 200, 300) and the image sensor (600). The cover glass (400) may be disposed adjacent to the image sensor (600). The cover glass (400) may have a shape corresponding to that of the image sensor (600). The cover glass (400) may be provided with a size larger than or equal to the image sensor (600) to protect the top of the image sensor (600).

Further, a filter (500) may be disposed between the plurality of lenses (100, 200, 300) and the image sensor (600). The filter (500) may be disposed between the image sensor (600) and the last lens (third lens 300) of the plurality of lenses (100, 200, 300) that is closest to the image sensor (600). More specifically, the filter (500) may be disposed between the cover glass (400) and the image sensor (600).

The filter (500) may allow light of a set wavelength band to pass through and filter out light of a different wavelength band. The filter (500) can pass light in a wavelength band that corresponds to the light received by the image sensor (600), and can block light in a wavelength band that does not correspond to the light received. Specifically, the filter (500) can pass light in the infrared wavelength band and block light in the ultraviolet, visible light band. For example, the filter (500) may include at least one of an IR pass filter and an IR cutoff filter.

The optical system (1000) according to the first embodiment may include an aperture (STOP). The aperture (STOP) may be disposed between the object and the first lens (100). The aperture (STOP) may be disposed in front of an object side (first surface S1) of the first lens (100). The aperture (STOP) may be spaced apart from the object side of the first lens (100). The aperture (STOP) may adjust the amount of light incident on the subject. The aperture (STOP) may adjust the amount of light incident on the first lens (100). The aperture (STOP) may include an aperture stop.

Referring now to Table 1, a plurality of lenses according to the present first embodiment will be described in more detail below.

[Table 1]

| lens | surface | Radius of curvature(mm) | Thickness or distance(mm) | Refracti ve index | Abbe number | Clear aperture size |
|---|---|---|---|---|---|---|
| First lens | First surface (S1) | 2.398 | 1.331 | 1.5350 | 55.7000 | 2.809 |
| | Second surface (S2) | 176.549 | 0.040 | | | 2.080 |
| STOP | - | infinity | 1.089 | | | 2.000 |
| Second lens | Third surface (S3) | -2.292 | 1.602 | 1.6714 | 19.2000 | 2.387 |
| | Fourth surface (S4) | -1.515 | 0.115 | | | 3.571 |
| Third lens | Fifth surface (S5) | 17.782 | 0.910 | 1.5350 | 55.7000 | 4.594 |
| | Sixth surface (S6) | 1.736 | 0.333 | | | 5.477 |
| filter | | infinity | 0.300 | | | 5.669 |
| | | infinity | 0.750 | | | 6.029 |

9

(continued)

| lens | surface | Radius of curvature(mm) | Thickness or distance(mm) | Refracti ve index | Abbe number | Clear aperture size |
|------|---------|------------------------|---------------------------|-------------------|-------------|---------------------|
| Cover glass | | infinity | 0.400 | | | 6.155 |
| Image sensor | | infinity | 0.045 | | | 6.181 |

Table 1 shows the Radius of Curvature, Thickness of each lens at the optical axis (OA), Distance between each lens at the optical axis (OA), Refractive index for light in the d-line (587.562 mm) wavelength band, Abbe's Number, and Clear aperture (CA) of the first to third lenses (100, 200, 300) according to the first embodiment. Here, the lens data listed in Table 1 are at room temperature (approximately 20°C).

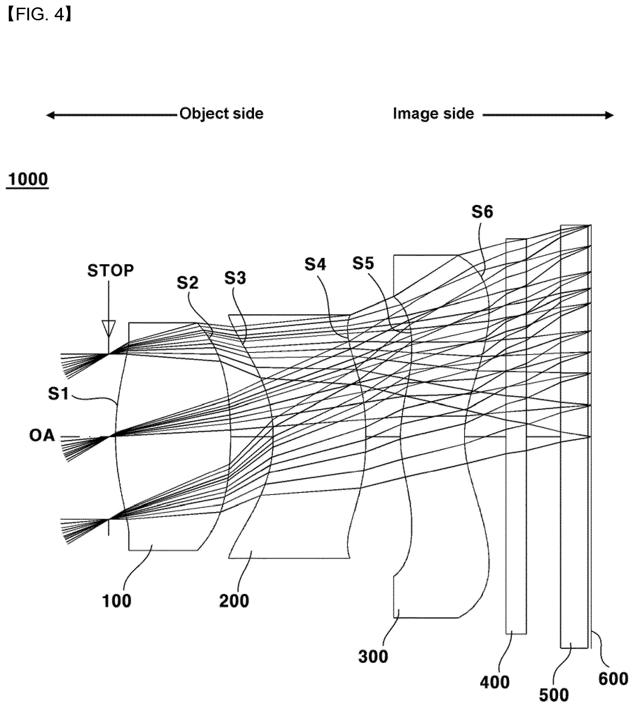

Referring to FIG. 4 and Table 1, the first lens (100) of the optical system (1000) according to the present first embodiment may have a plastic material. The first lens (100) may have a positive refractive power in the optical axis (OA). Further, in the optical axis (OA), the first surface (S1) of the first lens (100) may have a convex shape and the second surface (S2) may have a convex shape. The first lens (100) may have a convex shape on both sides in the optical axis (OA). The first surface (S1) may include at least one inflection point. The first surface (S1) may include at least one inflection point in a flange region, which is a region other than the clear aperture region.

At least one of the first surface (S1) and the second surface (S2) may be aspherical. For example, both the first surface (S1) and the second surface (S2) may be aspherical.

The second lens (200) may have a positive (+) or negative (-) refractive power in the optical axis (OA). The second lens (200) may be made of a plastic material.

The second lens (200) may include a third surface (S3), defined as an object side, and a fourth surface (S4), defined as a sensor side. The third surface (S3) may have a concave shape in the optical axis (OA) and the fourth surface (S4) may have a convex shape in the optical axis (OA), i.e., the second lens (200) may have a meniscus shape that is convex from the optical axis (OA) to the sensor side. The fourth surface (S4) may include at least one inflection point. The fourth surface (S4) may include at least one inflection point within the clear aperture region.

At least one of the third surface (S3) and the fourth surface (S4) may be aspherical. For example, both the third surface (S3) and the fourth surface (S4) may be aspherical.

The third lens (300) may have a positive (+) refractive power in the optical axis (OA). The third lens (300) may be made of a plastic material.

The third lens (300) may include a fifth surface (S5), defined as an object side, and a sixth surface (S6), defined as a sensor side. The fifth surface (S5) may have a convex shape in the optical axis (OA) and the sixth surface (S6) may have a concave shape in the optical axis (OA), i.e., the third lens (300) may have a meniscus shape that is convex from the optical axis (OA) to the object side. The fifth surface (S5) may include at least one inflection point. The fifth surface (S5) may include at least one inflection point in the clear aperture region. The sixth surface (S6) may include at least one inflection point. The sixth surface (S6) may include at least one inflection point in the clear aperture region.

At least one of the fifth surface (S5) and the sixth surface (S6) may be aspherical. For example, both the fifth surface (S5) and the sixth surface (S6) may be aspherical.

The following Table 2 provides data on the refractive index of the first to third lenses (100, 200, 300) for various wavelengths of light over a temperature range from low (-40°C) to high (85°C).

[Table 2]

| d-line 587.562 | | | |
|----------------|-----------|-------------|------------|
| temperature | First lens | Second lens | Third lens |
| -40 | 1.6761 | 1.5392 | 1.5392 |
| -20 | 1.6759 | 1.5386 | 1.5386 |
| -18 | 1.6737 | 1.5372 | 1.5372 |
| 0 | 1.6714 | 1.5348 | 1.5348 |
| 20 | 1.6690 | 1.5334 | 1.5334 |
| 40 | 1.6667 | 1.5310 | 1.5310 |

(continued)

| d-line 587.562 | | | |
|---|---|---|---|
| temperature | First lens | Second lens | Third lens |
| 60 | 1.6643 | 1.5292 | 1.5292 |
| 80 | 1.6637 | 1.5287 | 1.5287 |
| 85 | 1.6761 | 1.5392 | 1.5392 |

Referring to Table 2, the first lens (100), the second lens (200), and the third lens (300) may have different refractive index change characteristics as the temperature changes.

The second lens (200) and the third lens (300) may have the same refractive index, and the refractive index of the first lens (100) may be different from the refractive index of the second lens (200) and the third lens (300). The refractive indices of the second lens (200) and the third lens (300) may have a smaller value than the refractive index of the first lens (100).

Furthermore, referring to Table 2, it can be seen that the first to third lenses (100, 200, 300) have a very small refractive index that varies with temperature in a temperature range from a low temperature (about -40°C) to a high temperature (about 85°C). In particular, it can be seen that the change in the refractive index (dnt_1/dt, dnt_2/dt, dnt_3/dt) of the first to third lenses (100, 200, 300) with a change in temperature is negative.

The following Table 3 shows Sag data according to the vertical height (0.2 mm interval) of the optical axis (OA) of the first lens (100) on the object side (first surface S1) and the sensor side (second surface S2) at room temperature (about 20 °C).

In addition, Table 4 shows data for the lens thickness based on the vertical height of the optical axis (OA) at room temperature (about 20°C). Specifically, D_1 in Table 4 is the center thickness of the first lens (100), which is the thickness (mm) at the optical axis (OA) of the first lens (100). Further, D_1_ET in Table 4 means the thickness (mm) in the direction of the optical axis (OA) at the end of the effective area of the first lens (100). More specifically, it means a distance (mm) in the optical axis (OA) direction between the distal end of the effective area of the object side (first surface S1) of the first lens (100) and the distal end of the effective area of the sensor side (second surface S2) of the first lens (100).

[Table 3]

| Vertical height of the optical axis from the object side of the first lens (mm) | Sag on the object side in the first lens (mm) | Vertical height of the optical axis from the sensor side of the first lens (mm) | Sag on the sensor side in the first lens (mm) |
|---|---|---|---|
| 0 | 0 | 0 | 0 |
| 0.2 | 0.005230 | 0.2 | -0.003614 |
| 0.4 | 0.020791 | 0.4 | -0.014981 |
| 0.6 | 0.046235 | 0.6 | -0.035701 |
| 0.8 | 0.080564 | 0.8 | -0.068552 |
| 1.0 | 0.121614 | 1.0 | -0.117634 |
| 1.2 | 0.164360 | 1.2 | -0.188547 |
| 1.4 | 0.195194 | 1.4 | -0.288985 |
| 1.5 | 0.194695 | 1.6 | -0.431033 |
| - | - | 1.8 | -0.636120 |

[Table 4]

| Vertical height of the optical axis from the optical axis (mm) | Optical axis thickness of aperture (STOP) (mm) | Optical axis thickness of first lens (mm) |
|---|---|---|
| 0 | 0.1 | 1.675 (D_1) |
| 0.2 | 0.10523 | 1.667 |

(continued)

| Vertical height of the optical axis from the optical axis (mm) | Optical axis thickness of aperture (STOP) (mm) | Optical axis thickness of first lens (mm) |
|---|---|---|
| 0.4 | 0.12079 | 1.640 |
| 0.6 | 0.14623 | 1.594 |
| 0.8 | 0.18056 | 1.526 |
| 1.0 | 0.22161 | 1.436 |
| 1.2 | 0.26436 | 1.323 |
| 1.4 | 0.29519 | 1.191 |
| 1.6 | - | 1.076 |
| 1.7 | - | 1.064(D_1_ET) |

[Table 5]

| Vertical height of the optical axis from the optical axis (mm) | Slope of the object side of the first lens (first surface (S1)) angle(degree) | Slope of the sensor side of the first lens (second surface (S2)) angle(degree) |
|---|---|---|
| 0 | 0 | 0 |
| 0.2 | 2.9906 | -2.0957 |
| 0.4 | 5.9047 | -4.4928 |
| 0.6 | 8.6287 | -7.5108 |
| 0.8 | 10.9438 | -11.5066 |
| 1.0 | 12.3569 | -16.8809 |
| 1.2 | 11.5682 | -24.1070 |
| 1.4 | 4.2680 | -33.9905 |
| 1.5 | -6.0551 | -40.4448 |
| 1.6 | - | -48.3958 |
| 1.8 | - | -70.7591 |

Referring to Table 3 and Table 4, the thickness in the optical axis (OA) direction of the first lens (100) may become thinner from the optical axis (OA) towards the distal end of the clear aperture of the first lens (100). Specifically, the thickness in the optical axis (OA) direction of the first lens (100) may have a maximum value at the optical axis (OA) and a minimum value at the distal end of the clear aperture of the second surface (S2), in a range from the optical axis (OA) to the distal end of the clear aperture of the second surface (S2).

Furthermore, Table 5 is data of the slope angle (degree) of the object side (first surface S1) of the first lens and the sensor side (second surface S2) of the first lens according to the vertical height (0.2mm interval) of the optical axis (OA) at room temperature (about 20°C). The slope angle means the angle formed by the tangent line tangential to the lens face and the line perpendicular to the optical axis (OA).

Accordingly, the first lens (100) may have improved aberration control characteristics by controlling the incident light.

The following Table 6 shows Sag data according to the vertical height (0.2mm interval) of the optical axis (OA) of the object side (S3) and sensor side (S4) of the second lens (200) at room temperature (about 20°C).

In addition, Table 7 shows the data for the lens thickness based on the vertical height of the optical axis (OA) at room temperature (about 20°C). Specifically, D_2 in Table 7 is the center thickness of the second lens (200), which is the thickness (mm) at the optical axis (OA) of the second lens (200). Further, D_2_ET in Table 7 refers to the thickness (mm) in the direction of the optical axis (OA) at the distal end of the effective region of the second lens (200). More specifically, it means a distance (mm) in the optical axis (OA) direction between the distal end of the effective region of the object side (third surface (S3)) of the second lens (200) and the distal end of the effective region of the sensor side (fourth surface (S4)) of the second lens (200).

[Table 6]

| Vertical height of the optical axis from the object side of the second lens (mm) | Sag on object side of the second lens (mm) | Vertical height of the optical axis from the sensor side of the second lens (mm) | Sag on the sensor side of the second lens (mm) |
|---|---|---|---|
| 0 | 0 | 0 | 0 |
| 0.2 | -0.009675 | 0.2 | -0.004730 |
| 0.4 | -0.039147 | 0.4 | -0.020020 |
| 0.6 | -0.089529 | 0.6 | -0.048188 |
| 0.8 | -0.161652 | 0.8 | -0.090458 |
| 1.0 | -0.254261 | 1.0 | -0.144564 |
| 1.2 | -0.362343 | 1.2 | -0.202969 |
| 1.4 | -0.477139 | 1.4 | -0.251502 |
| 1.6 | -0.586203 | 1.6 | -0.268042 |
| 1.8 | -0.662877 | 1.8 | -0.220593 |
| - | - | 1.9 | -0.166148 |

[Table 7]

| Vertical height of the optical axis from the optical axis (mm) | Optical axis thickness of the second lens (mm) |
|---|---|
| 0 | 1.353 (D_2) |
| 0.2 | 1.358 |
| 0.4 | 1.372 |
| 0.6 | 1.395 |
| 0.8 | 1.424 |
| 1.0 | 1.463 |
| 1.2 | 1.513 |
| 1.4 | 1.579 |
| 1.6 | 1.671 |
| 1.8 | 1.796 (D_2_ET) |

[Table 8]

| Vertical height of the optical axis from the optical axis (mm) | Slope angle (degree) of the object side of the second lens (third surface (S3)) | Slope angle (degree)of the sensor side of the second lens (4th surface (S4)) |
|---|---|---|
| 0 | 0 | 0 |
| 0.2 | -0.009675 | -0.004730 |
| 0.4 | -0.039147 | -0.020020 |
| 0.6 | -0.089529 | -0.048188 |
| 0.8 | -0.161652 | -0.090458 |
| 1.0 | -0.254261 | -0.144564 |

(continued)

| Vertical height of the optical axis from the optical axis (mm) | Slope angle (degree) of the object side of the second lens (third surface (S3)) | Slope angle (degree)of the sensor side of the second lens (4th surface (S4)) |
|---|---|---|
| 1.2 | -0.362343 | -0.202969 |
| 1.4 | -0.477139 | -0.251505 |
| 1.6 | -0.586203 | -0.268042 |
| 1.8 | -0.662877 | -0.220593 |
| 1.9 | - | -0.166148 |

Referring to Table 6 and Table 7, the thickness in the optical axis (OA) direction of the second lens (200) may increase from the optical axis (OA) towards the distal end of the clear aperture of the second lens (200). Specifically, the thickness in the optical axis (OA) direction of the second lens (200) may have a minimum value at the optical axis (OA) and a maximum value at the distal end of the clear aperture of the third surface (S3), in a range from the optical axis (OA) to the distal end of the clear aperture of the third surface (S3).

Furthermore, Table 8 is data of the slope angle (degree) of the object side (fourth surface S4) of the second lens (200) and the sensor side (second surface S2) of the second lens (200) according to a vertical height (0.2mm interval) of the optical axis (OA) at room temperature (about 20°C). The slope angle means the angle formed by a tangent line tangential to the lens plane and a line perpendicular to the optical axis (OA).

Accordingly, the second lens (200) can prevent or minimize optical characteristic changes based on temperature in a temperature range from low to high temperatures.

The following Table 9 is Sag data according to the vertical height (0.2mm interval) of the optical axis (OA) of the object side (S5) and the sensor side (S6) of the third lens (300) at room temperature (about 20°C).

In addition, Table 10 shows data for lens thickness based on vertical height of the optical axis (OA) at room temperature (about 20°C). Specifically, D_3 in Table 10 is the center thickness of the third lens (300), which is the thickness (mm) at the optical axis (OA) of the third lens (300). Further, D 3_ET in Table 10 refers to the thickness (mm) in the direction of the optical axis (OA) at the end of the effective region of the third lens (300). More specifically, it means a distance (mm) in the optical axis (OA) direction between the distal end of the effective region of the object side (S5) of the third lens (300) and the distal end of the effective region of the sensor side (S6) of the third lens (300).

[Table 9]

| Vertical height of the optical axis from the object side of the third lens (mm) | Sag on the object side of the third lens (mm) | Vertical height of the optical axis from the sensor side of the third lens (mm) | Sag on the sensor side of the third lens (mm) |
|---|---|---|---|
| 0 | 0 | 0 | 0 |
| 0.2 | 0.009512 | 0.2 | 0.010912 |
| 0.4 | 0.035696 | 0.4 | 0.042138 |
| 0.6 | 0.072374 | 0.6 | 0.089410 |
| 0.8 | 0.111310 | 0.8 | 0.146471 |
| 1.0 | 0.143974 | 1.0 | 0.206264 |
| 1.2 | 0.163126 | 1.2 | 0.262227 |
| 1.4 | 0.163384 | 1.4 | 0.309125 |
| 1.6 | 0.139353 | 1.6 | 0.342782 |
| 1.8 | 0.079361 | 1.8 | 0.358563 |
| 2.0 | -0.056172 | 2.0 | 0.349142 |
| 2.1 | -0.191046 | 2.2 | 0.301952 |
| 2.3 | - | 2.4 | 0.192825 |

(continued)

| Vertical height of the optical axis from the object side of the third lens (mm) | Sag on the object side of the third lens (mm) | Vertical height of the optical axis from the sensor side of the third lens (mm) | Sag on the sensor side of the third lens (mm) |
|---|---|---|---|
| - | - | 2.6 | -0.034866 |
| - | - | 2.8 | -0.367243 |

[Table 10]

| Vertical height of the optical axis from the optical axis (mm) | Optical axis thickness of the third lens (mm) |
|---|---|
| 0 | 0.930 (D_3) |
| 0.2 | 0.931 |
| 0.4 | 0.936 |
| 0.6 | 0.947 |
| 0.8 | 0.965 |
| 1.0 | 0.992 |
| 1.2 | 1.029 |
| 1.4 | 1.075 |
| 1.6 | 1.133 |
| 1.8 | 1.209 |
| 2.0 | 1.335 |
| 2.2 | 1.658 |
| 2.4 | 2.784 |
| 2.6 | 6.897 |
| 2.7 | 11.891 (D_3_ET) |

[Table 11]

| Vertical height of the optical axis from the optical axis (mm) | Slope angle (degree)of the object side of the 3rd lens (5th surface (S5)) | Slope angle (degree) of the sensor side of the 3rd lens (6th surface (S6)) |
|---|---|---|
| 0 | 0 | 0 |
| 0.2 | 5.3324 | 6.1787 |
| 0.4 | 9.3659 | 11.5051 |
| 0.6 | 11.2477 | 15.2753 |
| 0.8 | 10.6456 | 17.0746 |
| 1.0 | 7.7200 | 16.8662 |
| 1.2 | 3.0045 | 14.9496 |
| 1.4 | -3.0886 | 11.7293 |
| 1.6 | -11.1617 | 7.3448 |
| 1.8 | -24.7729 | 1.3576 |
| 2.0 | -59.1111 | -7.3335 |
| 2.1 | -99.7947 | -13.2565 |

(continued)

| Vertical height of the optical axis from the optical axis (mm) | Slope angle (degree)of the object side of the 3rd lens (5th surface (S5)) | Slope angle (degree) of the sensor side of the 3rd lens (6th surface (S6)) |
|---|---|---|
| 2.2 | - | -20.7654 |
| 2.4 | - | -44.2753 |
| 2.6 | - | -91.4362 |
| 2.8 | - | 67.5865 |

Referring to Table 9 and Table 10, the thickness in the optical axis (OA) direction of the third lens (300) may increase from the optical axis (OA) towards the distal end of the clear aperture of the third lens (300). Specifically, the thickness in the optical axis (OA) direction of the third lens (300) may range from the optical axis (OA) to the distal end of the clear aperture of the fifth surface (S5), and may have a maximum value at the distal end of the clear aperture of the fifth surface (S5) and a minimum value at the optical axis (OA).

Further, Table 11 is data of the slope angle (degree) of the object side (fifth surface S5) of the third lens (300) and the sensor side (sixth surface S6) of the third lens (300) according to the vertical height (0.2mm interval) of the optical axis (OA) at room temperature (about 20°C). The slope angle means the angle formed by a tangent line tangential to the lens face and a line perpendicular to the optical axis (OA).

Accordingly, the third lens (300) can prevent or minimize the optical characteristic change with temperature in a temperature range from low to high temperature.

In the optical system (1000) according to the present first embodiment, the values of the aspheric coefficient of each lens face are as shown in the following Table 12.

[Table 12]

| | First surface (S1) | Second surface (S2) | Third surface (S3) | Fourth surface (S4) | Fifth surface (S5) | Six surface (S6) |
|---|---|---|---|---|---|---|
| Y | 3.8169 | -5.6010 | -2.0757 | -4.3230 | 2.0576 | 1.8115 |
| K | -13.8809 | 5.7173 | -0.3993 | 3.8198 | -7.4557 | -0.5893 |
| A | 0.0227 | -0.0223 | -0.0164 | -0.0595 | -0.0398 | -0.0895 |
| B | -0.0149 | -0.0004 | 0.0061 | 0.0521 | -0.0128 | 0.0106 |
| C | 0.0058 | -0.0008 | 0.0103 | -0.0174 | 0.0127 | 0.0004 |
| D | -0.0033 | 0.0008 | -0.0054 | 0.0054 | -0.0045 | -0.0006 |
| E | 0.0010 | -0.0003 | 0.0011 | -0.0011 | 0.0008 | 0.0001 |
| F | -0.0002 | 0.0000 | -0.0001 | 0.0001 | -0.0001 | 0.0000 |

Further, in the optical system (1000) according to the present first embodiment, the distance (first distance) between the first lens (100) and the second lens (200) may be as shown in the following Table 13 at room temperature (about 20°C).

[Table 13]

| Vertical height of the optical axis from the sensor side of the first lens (mm) | Optical axis distance of the 1st air gap (d12) (mm) (1st distance) | Vertical height of the optical axis from the object side of the second lens (mm) |
|---|---|---|
| 0 | 0.624 | 0 |
| 0.2 | 0.618 | 0.2 |
| 0.4 | 0.600 | 0.4 |
| 0.6 | 0.571 | 0.6 |
| 0.8 | 0.531 | 0.8 |

(continued)

| Vertical height of the optical axis from the sensor side of the first lens (mm) | Optical axis distance of the 1st air gap (d12) (mm) (1st distance) | Vertical height of the optical axis from the object side of the second lens (mm) |
|---|---|---|
| 1.0 | 0.488 | 1.0 |
| 1.2 | 0.451 | 1.2 |
| 1.4 | 0.436 | 1.4 |
| 1.6 | 0.469 | 1.6 |
| 1.7(L1) | 0.517 | 1.7(L1) |

Referring to Table 13, the first distance (d12) may be a distance in the optical axis direction from the sensor side of the first lens to the object side of the second lens. The first distance (d12) may be the first air gap (d12).

The first distance may decrease from the optical axis (OA) to the first point (L1), which is the distal end of the clear aperture of the second surface (S2). Here, the value meant by the first point (L1) is an approximate value of the effective radius value of the second surface (S2) of the sensor side (second surface S2) of the first lens (100) and the object side (third surface S3) of the second lens (200) facing each other, which is an approximate value of 1/2 of the effective radius value of the second surface (S2) listed in Table 3.

The first distance may have a maximum value in the optical axis (OA). The maximum value of the first distance may be from about 1.3 times to about 1.5 times the minimum value. For example, in this first embodiment, the maximum value of the first distance may be about 1.42 times the minimum value.

Further, in the optical system (1000) according to this first embodiment, the distance (second distance) between the second lens (200) and the third lens (300) may be as shown in the following Table 14 at room temperature (about 20°C).

[Table 14]

| Vertical height of the optical axis from the sensor side of the second lens (mm) | Optical axis distance of 2nd air gap (d23) (mm) (2nd distance) | Vertical height of the optical axis from the object side of the third lens (mm) |
|---|---|---|
| 0 | 0.500 | 0 |
| 0.2 | 0.514 | 0.2 |
| 0.4 | 0.556 | 0.4 |
| 0.6 | 0.621 | 0.6 |
| 0.8 | 0.702 | 0.8 |
| 1.0 | 0.789 | 1.0 |
| 1.2 | 0.866 | 1.2 |
| 1.4 | 0.915 | 1.4 |
| 1.6 | 0.907 | 1.6 |
| 1.8 | 0.800 | 1.8 |
| 1.9(L2) | 0.692 | 1.9(L2) |

Referring to Table 14, the second distance (d23) may refer to an optical axis direction from the sensor side of the second lens to the object side of the third lens. The second distance (d23) may be a second air gap d23.

The second distance may increase from the optical axis (OA) to a second point (L2), which is the distal end of the clear aperture of the fourth surface (S4). Here, the value meant by the second point (L2) is an approximate value of the effective radius value of the fourth surface (S4) of the sensor side (S4) of the second lens (200) facing each other and the object side (S5) of the third lens (300), which has a smaller effective radius size, such as an approximate value of 1/2 of the effective radius value of the fourth surface (S4) listed in Table 3.

The second distance may have a minimum value in the optical axis (OA). The maximum value of the second distance may be from about 1.5 times to about 2 times the minimum value. For example, in this first embodiment, the maximum value of the second distance may be about 1.83 times the minimum value.

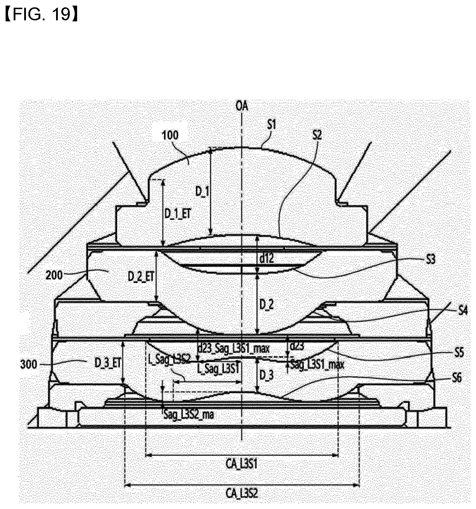

The optical system (1000) according to this first embodiment may satisfy at least one of the mathematical expressions described below. Accordingly, the optical system (1000) according to this first embodiment can prevent or minimize the optical characteristic change with temperature in a temperature range from low to high temperatures, thereby enabling improved optical characteristics at various temperatures. Furthermore, the optical system (1000) according to embodiments may have improved distortion and aberration characteristics at various temperatures by satisfying at least one of the mathematical expressions described later. The terms used in some of the mathematical expressions will be explained with reference to FIG. 19.

## [Mathematical Expression 1]

$$1 < L1\_CT / L2\_CT < 1.5$$

In Mathematical Expression 1, L1_CT is the thickness (mm) at the optical axis (OA) of the first lens (100) as the center thickness of the first lens (100) at room temperature (approx. 20°C). L2_CT is the thickness (mm) at the optical axis (OA) of the second lens (200) as the center thickness of the second lens (200) at room temperature (about 20°C).

When the optical system (1000) according to an exemplary embodiment satisfies Mathematical Expression 1, the optical system (1000) may have improved optical system aberration control characteristics.

## [Mathematical Expression 2]

$$1.2 < L1\_CT / L1\_ET < 1.8$$

In Mathematical Expression 2, L1_CT is the thickness (mm) in the optical axis (OA) of the first lens (100) as the center thickness of the first lens (100) at room temperature (about 20°C). Further, L1_ET means a thickness (mm) in the direction of the optical axis (OA) at the distal end of the effective region of the first lens (100) at room temperature (about 20°C).

More specifically, L1_ET means the distance (mm) in the optical axis (OA) direction between the distal end of the effective region on the object side (first surface S1) of the first lens (100) and the distal end of the effective region on the sensor side (second surface S2) of the first lens (100). L1_ET may be the thickness of the flange outside the clear aperture of the first lens (100).

If the optical system (1000) according to an exemplary embodiment satisfies the Mathematical Expression 2, the optical system (1000) may have improved chromatic aberration reduction characteristics.

## [Mathematical Expression 3]

$$1 < L3\_ET / L3\_CT < 1.5$$

In Mathematical Expression 3, L3_CT is the thickness (mm) in the optical axis (OA) of the first lens (300) as the center thickness of the third lens (300) at room temperature (about 20°C). Further, L3_ET is the thickness (mm) in the direction of the optical axis (OA) at the distal end of the effective region of the third lens (300) at room temperature (about 20°C).

More specifically, L3_ET means the distance (mm) in the optical axis (OA) direction between the end of the effective region on the object side (S5) of the third lens (300) and the distal end of the effective region on the sensor side (S6) of the third lens 300. L3_ET may be the thickness of the flange outside the clear aperture of the first lens (100).

If the optical system (1000) according to an exemplary embodiment satisfies the Mathematical Expression 3, the optical system (1000) may have improved aberration reduction characteristics.

## [Mathematical Expression 4]

$$1.6 < n1 < 1.8$$

In Mathematical Expression 4, n1 is the refractive index for light in the d-line (587.6 nm) wavelength band of the first lens (100).

## [Mathematical Expression 5]

## 100 < |L3S2_max slope angle| < 120

In Mathematical Expression 5, L3S2_max slope angle means the maximum value of the angle that a tangent line tangential to the sensor side of the third lens (300) makes with a line perpendicular to the optical axis (OA).

If the optical system (1000) according to an exemplary embodiment satisfies the Mathematical Expression 5, the optical system (1000) may minimize flare phenomena.

## [Mathematical Expression 6]

## 0 < d23_CT / d23_max < 0.8

In Mathematical Expression 6, d23_CT is the distance (mm) from the optical axis (OA) from the sensor side (foruth surface (S4)) of the second lens (200) to the object side (fifth surface (S5)) of the third lens (300) at room temperature (approx. 20°C). Furthermore, d23_max is a distance (mm) between the largest of the distances (mm) from the sensor side (S4) of the second lens (200) to the object side (S5) of the third lens 300 at room temperature (about 20°C).

When the optical system (1000) according to an exemplary embodiment satisfies the Mathematical Expression 6, the optical system (1000) may have improved peripheral, chromatic, and distortion aberration characteristics of the field of view.

## [Mathematical Expression 7]

## 0.2 < L2R1 / L2R2 < 0.6

In Mathematical Expression 7, L2R1 is a radius of curvature of the object side (third surface S3) of the second lens (200) at room temperature (about 20°C), and L2R2 is a radius of curvature of the sensor side (fourth surface S4) of the second lens (200) at room temperature (about 20°C).

When the optical system (1000) according to an exemplary embodiment satisfies the Mathematical Expression 7, the optical system (1000) may have improved aberration control characteristics.

## [Mathematical Expression 8]

## 1 < L_CT_Max / Air_Max < 2

In Mathematical Expression 8, L CT_Max means the largest value of the center thickness of the first to third lenses (100, 200, 300) in the direction of the optical axis (OA). Further, Air_Max means the greater of the distance between the first lens (100) and the second lens (200) in the optical axis (OA) direction and the distance between the second lens (200) and the third lens (300) in the optical axis (OA) direction.

If the optical system (1000) according to an exemplary embodiment satisfies the Mathematical Expression 8, the optical system (1000) may have good optical performance and TTL reduction characteristics at a set field of view and focal length.

## [Mathematical Expression 9]

## 2.8 < ΣL_CT / ΣAir_CT < 3.8

In Mathematical Expression 9, ΣL_CT means the sum of the center thicknesses of the first to third lenses (100, 200, and 300) in the optical axis (OA) direction. Further, ΣAir_CT means the sum of the distance between the first lens (100) and the second lens (200) and the distance between the second lens (200) and the third lens (300) in the optical axis (OA) direction.

If the optical system (1000) according to an exemplary embodiment satisfies the Mathematical Expression 9, the optical system (1000) may have good optical performance and TTL reduction characteristics at a set field of view and focal length.

[Mathematical Expression 10]

$$20 < \sum Abb \, / \sum Index \; < 30$$

In Mathematical Expression 10, $\Sigma$Index is the sum of the refractive indices at the d-line of each of the first to third lenses at room temperature (approximately 20°C). Also, $\Sigma$Abb means the sum of the Abbe's numbers of each of the first to third lenses at room temperature (about 20°C).

When the optical system (1000) according to an exemplary embodiment satisfies the Mathematical Expression 10, the optical system (1000) may have improved aberration characteristics and resolution power.

[Mathematical Expression 11]

$$1 < |Max\_distortion| < 4$$

In Mathematical Expression 11, Max_distortion may refer to a maximum value of optical distortion of the optical system (1000).

If the optical system (1000) according to an exemplary embodiment satisfies the Mathematical Expression 11, the optical system (1000) may have an improved distortion characteristic.

[Mathematical Expression 12]

$$0.2 < Air\_Edge\_Max \, / \, L\_CT\_Max < 0.7$$

In Mathematical Expression 12, Air_Edge_Max means the maximum of the distance (mm) of the edge portion between the first lens (100) and the second lens (200) in the optical axis (OA) direction and the distance (mm) of the edge portion between the second lens (200) and the third lens (300) in the optical axis (OA) direction. Also, L_CT _Max means a maximum value of the center thickness of the first to third lenses (100, 200, 300) in the optical axis (OA) direction.

When the optical system (1000) according to an exemplary embodiment satisfies the Mathematical Expression 12, the optical system (1000) may have optical performance and TTL reduction structure characteristics.

[Mathematical Expression 13]

$$1 < CA\_max \, / \, CA\_min < 2$$

In Mathematical Expression 13, CA_max is the clear aperture size (CA) of the lens face having the largest clear aperture size (CA) at room temperature (about 20°C) among the lens faces of the plurality of lenses (100, 200, 300) included in the optical system (1000).

Further, CA_min is the clear aperture size (CA) of the lens face having the smallest clear aperture size (CA) at room temperature (about 20°C) among the lens faces of the plurality of lenses (100, 200, 300) included in the optical system (1000).

If the optical system (1000) according to an exemplary embodiment satisfies the Mathematical Expression 13, the optical system (1000) may have optical performance and TTL reduction structure characteristics.

[Mathematical Expression 14]

$$1.2 < CA\_max \, / \, CA\_Aver < 1.5$$

In Mathematical Expression 14, CA_max is the clear aperture size (CA) of the lens face having the largest clear aperture size (CA) at room temperature (about 20°C) among the lens faces of the plurality of lenses (100, 200, 300) included in the optical system (1000).

Further, CA_Aver means an average (mm) of the clear aperture size (CA) at room temperature (about 20°C) of the lens faces (object side, sensor side) of the plurality of lenses (100, 200, 300) included in the optical system (1000).

If the optical system (1000) according to an exemplary embodiment satisfies the Mathematical Expression 14, the optical system (1000) may have optical performance and TTL reduction structure characteristics.

## [Mathematical Expression 15]

$$0.2 < CA\_min / CA\_Aver < 0.8$$

In Mathematical Expression 15, CA_min is the clear aperture size (CA) of the lens face having the smallest clear aperture size (CA) at room temperature (about 20°C) among the lens faces of the plurality of lenses (100, 200, 300) included in the optical system (1000).

Further, CA_Aver means an average (mm) of the clear aperture size (CA) at room temperature (about 20°C) of the lens faces (object side, sensor side) of the plurality of lenses (100, 200, 300) included in the optical system (1000).

If the optical system (1000) according to an exemplary embodiment satisfies the Mathematical Expression 15, the optical system (1000) may be provided in a slim and compact structure and may have a suitable size for optical performance in a temperature range from low to high temperature.

## [Mathematical Expression 16]

$$0.2 < CA\_max / (2*ImgH) < 1$$

In Equation 16, CA_max is the clear aperture size (CA) of the lens face having the largest clear aperture size (CA) at room temperature (about 20°C) among the lens faces of the plurality of lenses (100, 200, 300) included in the optical system (1000).

Further, ImgH is a value of twice the vertical distance of the optical axis (OA) from a 0 field region at the top center of the image sensor (600) that overlaps with the optical axis (OA) to a 1.0 field region of the image sensor (600) at room temperature (about 20°C). In other words, ImgH is the total diagonal length (mm) of the image sensor (600) at room temperature (about 20°C).

If the optical system (1000) according to an exemplary embodiment satisfies the Mathematical Expression 16, the optical system (1000) may be provided in a slim and compact structure, and may have a suitable size for optical performance in a temperature range from low to high temperature.

## [Mathematical Expression 17]

$$1 < f / L1R1 < 2$$

In Mathematical Expression 17, f means the effective focal length (mm) of the optical system (1000) at room temperature (about 20°C). f may be an effective focal length (EFL).

Further, L1R1 is a radius of curvature of an object side (first surface S1) of the first lens (100) at room temperature (about 20°C).

If the optical system (1000) according to an exemplary embodiment satisfies the Mathematical Expression 17, the optical system (1000) may be provided in a TTL reduced structure.

## [Mathematical Expression 18]

$$0.5 < EPD / L1R1 < 1$$

In Mathematical Expression 18, EPD (Entrance Pupil Diameter) is the diameter of the entrance pupil.

Further, L1R1 is a radius of curvature of the object side (first surface S1) of the first lens (100) at room temperature (about 20°C).

If the optical system (1000) according to an exemplary embodiment satisfies the Mathematical Expression 18, the optical system (1000) may have an incident light control characteristic.

## [Mathematical Expression 19]

$$0.1 < |f1 / f2| < 0.5$$

In Mathematical Expression 19, f1 is a focal length (mm) of the first lens (100) at room temperature (about 20°C), and f2 is a focal length (mm) of the second lens (200) at room temperature (about 20°C).

When the optical system (1000) according to an exemplary embodiment satisfies the Mathematical Expression 19, the first lens (100) and the second lens (200) may have appropriate refractive power for controlling the incoming light path, and the optical system (1000) may have improved resolution.

## [Mathematical Expression 20]

$$6mm < TTL < 8mm$$

In Mathematical Expression 20, TTL is the distance (mm) on the optical axis (OA) from the object side face (first surface S1) of the first lens (100) to the upper surface of the image sensor (600) at room temperature (about 20°C).

## [Mathematical Expression 21]

$$2mm < ImgH < 4mm$$

In Mathematical Expression 21, ImgH is twice the vertical distance of the optical axis (OA) at room temperature (about 20 °C) from the 0-field region of the top-center field of the image sensor (600) that overlaps the optical axis (OA) to the 1.0-field region of the image sensor (600). In other words, ImgH is the total diagonal length (in mm) of the image sensor (600) at room temperature (about 20 °C).

## [Mathematical Expression 22]

$$1mm < BFL < 2.5mm$$

In Mathematical Expression 22, BFL (back focal length) is the distance (mm) on the optical axis (OA) from the apex of the sensor side of the lens closest to the image sensor (600) to the top surface of the image sensor (600) at room temperature (approximately 20°C).

## [Mathematical Expression 23]

$$2mm < f < 5mm$$

In Mathematical Expression 23, f means the effective focal length (mm) of the optical system (1000) at room temperature (about 20°C). F may be the effective focal length (EFL).

## [Mathematical Expression 24]

$$25 \text{ degree} < FOV < 35 \text{ degree}$$

In Mathematical Expression 24, FOV refers to the field of view (FOV) of the optical system (1000) in room temperature (about 20°C), low temperature (about -40°C), and high temperature (about 85°C) environments.

## [Mathematical Expression 25]

$$1 < TTL / CA\_max < 1.5$$

In Mathematical Expression 25, TTL is a distance (mm) on the optical axis (OA) from the object side face (first surface S1) of the first lens (100) to the upper surface of the image sensor (600) at room temperature (about 20°C).

Further, CA_max is the clear aperture size (CA) of the lens face having the largest clear aperture size (CA) at room temperature (about 20°C) among the lens faces of the plurality of lenses (100, 200, 300) included in the optical system (1000).

When the optical system (1000) according to an exemplary embodiment satisfies the Mathematical Expression 25, the optical system (1000) has good optical performance in the center and periphery of the field of view (FOV) and can be provided in a slim and compact structure.

[Mathematical Expression 26]

$$2 < TTL / ImgH < 2.5$$

In Mathematical Expression 26, TTL is the distance in mm on the optical axis (OA) from the object side face (first surface S1) of the first lens (100) to the upper surface of the image sensor (600) at room temperature (about 20°C).

Further, ImgH is twice the value of the vertical distance in the optical axis (OA) from a 0-field region center on the upper surface of the image sensor (600) that overlaps the optical axis (OA) to a 1.0-field region of the image sensor (600) at room temperature (about 20°C). In other words, ImgH is the total diagonal length (mm) of the image sensor (600) at room temperature (about 20°C).

If the optical system (1000) according to an exemplary embodiment satisfies the Mathematical Expression 26, the optical system (1000) can have a back focal length (BFL) for applying a relatively large sized image sensor (600), such as a large image sensor (600) around 1 inch, and can have a smaller TTL, resulting in a high definition implementation and a slim structure.

[Mathematical Expression 27]

$$0.2 < BFL / ImgH < 0.7$$

In Mathematical Expression 27, BFL (back focal length) is the distance (mm) in the optical axis (OA) from the apex of the sensor side of the lens closest to the image sensor (600) to the upper surface of the image sensor (600) at room temperature (about 20°C).

Further, ImgH is twice the vertical distance in the optical axis (OA) from the 0 field region at the center of the upper surface of the image sensor (600) that overlaps the optical axis (OA) to the 1.0 field region of the image sensor (600) at room temperature (about 20 °C). In other words, ImgH is the overall diagonal length (in mm) of the image sensor (600) at room temperature (about 20 °C).

If the optical system (1000) according to an exemplary embodiment satisfies the Mathematical Expression 27, the optical system (1000) can have a back focal length (BFL) for applying a relatively large size image sensor (600), such as a large image sensor (600) around 1 inch, and can minimize the gap between the last lens and the image sensor (600) to have good optical properties in the center and periphery of the field of view (FOV).

[Mathematical Expression 28]

$$3.5 < TTL / BFL < 4$$

In Mathematical Expression 28, TTL is the distance (mm) in the optical axis (OA) from the object side face (first surface S1) of the first lens (100) to the upper surface of the image sensor (600) at room temperature (about 20°C).

Further, the back focal length (BFL) is a distance (mm) in the optical axis (OA) from the apex of the sensor side of the lens closest to the image sensor (600) at room temperature (about 20°C) to the upper surface of the image sensor (600).

If the optical system (1000) according to an exemplary embodiment satisfies the Mathematical Expression 28, the optical system (1000) may be provided slim and compact while ensuring a BFL.

## [Mathematical Expression 29]

$$0.5 < f / TTL < 1$$

In Mathematical Expression 29, f means the effective focal length (mm) of the optical system (1000) at room temperature (about 20°C). F may be an effective focal length (EFL).

Further, TTL is a distance (mm) on the optical axis (OA) from the object-side surface (first surface S1) of the first lens (100) to the upper surface of the image sensor (600) at room temperature (about 20°C).

If the optical system (1000) according to an exemplary embodiment satisfies the Mathematical Expression 29, the optical system (1000) may be provided slim and compact.

## [Mathematical Expression 30]

$$2.5 < f / BFL < 3$$

In Mathematical Expression 30, f means the effective focal length (mm) of the optical system (1000) at room temperature (about 20°C). f may be the effective focal length (EFL).

Further, BFL (back focal length) is a distance (mm) on the optical axis (OA) from the apex of the sensor side of the lens closest to the image sensor 600 to the upper surface of the image sensor (600) at room temperature (about 20°C).

If the optical system (1000) according to an exemplary embodiment satisfies the Mathematical Expression 30, the optical system (1000) can have a set field of view, can have a suitable focal length, and can be provided slim and compact. Furthermore, the optical system (1000) can minimize the gap between the last lens and the image sensor (600), which can have good optical properties at the periphery of the field of view (FOV).

## [Mathematical Expression 31]

$$1.3 < f / ImgH < 1.8$$

In Mathematical Expression 31, f means the effective focal length (mm) of the optical system (1000) at room temperature (about 20°C). F may be an effective focal length (EFL).

In addition, ImgH is a value of twice the vertical distance of the optical axis (OA) from a 0 field region at the upper center of the image sensor (600) that overlaps with the optical axis (OA) to a 1.0 field region of the image sensor (600) at room temperature (about 20°C). In other words, ImgH means the overall diagonal length (mm) of the image sensor (600) at room temperature (about 20°C).

If the optical system (1000) according to an exemplary embodiment satisfies the Mathematical Expression 31, the optical system (1000) may apply a relatively large size image sensor (600), such as a large image sensor (600) of about 1 inch or larger, and may have improved aberration characteristics.

## [Mathematical Expression 32]

$$2 < f / EPD < 2.5$$

In Mathematical Expression 32, f means the effective focal length (mm) of the optical system (1000) at room temperature (about 20°C). F may be the effective focal length (EFL). Also, EPD (Entrance Pupil Diameter) means the diameter of the entrance pupil.

## [Mathematical Expression 33]

$$1.8 < Fno < 2.2$$

In Mathematical Expression 33, Fno means an F-number of the optical system.

If the optical system (1000) according to the exemplary embodiment satisfies the Mathematical Expression 33, it is possible to shoot in a dark environment as well as in a bright environment, and in particular, it is possible to detect near infrared ray light.

## [Mathematical Expression 34]

$$v1 < v2$$

In Mathematical Expression 34, v1 means the Abbe-number of the first lens (100) and v2 means the Abbe-number of the second lens (200).

## [Mathematical Expression 35]

$$10 < v1 < 20$$

In Mathematical Expression 35, v1 means the Abbe-number of the first lens.

## [Mathematical Expression 36]

$$50 < v2 < 60$$

In Mathematical Expression 36, v2 is the Abbe-number of the second lens.

## [Mathematical Expression 37]

$$Z = \frac{cY^2}{1 + \sqrt{1 - (1+K)c^2Y^2}} + AY^4 + BY^6 + CY^8 + DY^{10} + EY^{12} + FY^{14} + \cdots$$

In Mathematical Expression 37, Z is Sag, which can mean the distance in the direction of the optical axis from any location on the aspheric surface to the apex of the aspheric surface.

Further, Y may mean the distance in the direction perpendicular to the optical axis from any position on the aspheric surface to the optical axis.

Further, c may mean the curvature of the lens, and K may mean the Kohnig constant.

Further, A, B, C, D, ... may mean an aspheric constant.

In other words, in the optical system (1000) according to an exemplary embodiment, the first lens (100), the second lens (200), and the third lens (300) may be provided with the same material and may satisfy at least one of the mathematical expressions of mathematical expression 1 to mathematical expression 37 described above. Accordingly, the optical system (1000) may prevent or minimize the change in optical properties with temperature, and may have improved optical properties at various temperatures.

Further, the exemplary optical system (1000) may satisfy at least one of the mathematical expressions of mathematical expression 1 to mathematical expression 37, thereby preventing or minimizing changes in distortion and aberration characteristics at various temperatures, and may have improved optical properties.

The following Table 15 below shows the entries of the above Mathematical Expressions in the optical system (1000) according to the first embodiment of the present invention, such as focal lengths of the first to third lenses (100, 200, 300) at room temperature (about 20°C), total track length (TTL), back focal length (BFL), F-value, ImgH, effective focal length (EFL) values, and the like, depending on the temperature of the optical system (1000).

Table 16 shows the resulting values for Mathematical Expression 1 to Mathematical Expression 36 above in the optical system (1000) according to the first embodiment.

[Table 15]

|  | First exemplary embodiment |
|---|---|
| D1_CT | 1.6754 mm |
| D2_CT | 1.3533 mm |

(continued)

|  | First exemplary embodiment |
|---|---|
| D3_CT | 0.9297 mm |
| D1_ET | 1.0000 mm |
| D2_ET | 1.7064 mm |
| D3_ET | 0.9319 mm |
| f1 (room temperature(about 20°C)) | 3.7905 mm |
| f2 (room temperature (about 20°C)) | -9.5737 mm |
| f3 (room temperature (about 20°C)) | 94.9550 mm |
| EPD (room temperature (about 20°C)) | 2.4016 mm |
| TD(L1 S1~L3S2) (room temperature (about 20°C)) | 5.0829 mm |
| SD(Stop~L3S2) (room temperature (about 20°C)) | 5.1829 mm |
| EFL (room temperature (20°C)) | 4.9946 mm |
| EFL (low temperature(-40°C)) | 4.8686 mm |
| EFL (high temperature(85°C)) | 5.0956 mm |
| BFL (room temperature (20°C)) | 1.8596 mm |
| BFL (low temperature (-40°C)) | 1.8483 mm |
| BFL (high temperature (85°C)) | 1.8716mm |
| Fno (room temperature (20°C)) | 2.0752 |
| Fno (low temperature (-40°C)) | 2.0756 |
| Fno (high temperature (85°C)) | 2.0748 |
| TTL (room temperature (20°C)) | 6.9892 mm |
| TTL (low temperature (-40°C)) | 6.9666 mm |
| TTL (high temperature (85°C)) | 7.0136 mm |
| FOV (room temperature (20°C)) | 30.9551 degree |
| FOV (low temperature (-40°C)) | 31.0771 degree |
| FOV (high temperature (85°C)) | 30.7685 degree |

[Table 16]

|  | Mathematical Expressions | First exemplary embodiment |
|---|---|---|
| Mathematical Expression 1 | 1 < L 1_CT / L2_CT < 1.5 | 1.238 |
| Mathematical Expression 2 | 1.2 < L1_CT / L1_ET < 1.8 | 1.675 |
| Mathematical Expression 3 | 1 < L3_ET / L3_CT < 1.5 | 1.002 |
| Mathematical Expression 4 | 1.6 < n1 <1.8 | 1.671 |
| Mathematical Expression 5 | 100 < |L3S2_max slope angle| < 120 | 118.532 |
| Mathematical Expression 6 | 0.2 < d23_CT / d23_max < 0.8 | 0.520 |
| Mathematical Expression 7 | 0.2 < L2R1 / L2R2 < 0.8 | 0.480 |
| Mathematical Expression 8 | 1 < L_CT_Max / Air_Max < 2 | 1.831 |
| Mathematical Expression 9 | 2.8 < ∑L_CT / ∑Air_CT < 3.8 | 3.521 |

(continued)

|  | Mathematical Expressions | First exemplary embodiment |
|---|---|---|
| Mathematical Expression 10 | 20 < ∑Abb / ∑Index < 30 | 27.591 |
| Mathematical Expression 11 | 1 < \|Max_distoriton\| < 4 | 3.509 |
| Mathematical Expression 12 | 0.2 < Air_Edge_Max / L_CT_Max < 0.7 | 0.413 |
| Mathematical Expression 13 | 1 < CA_max / CA_min < 2 | 1.913 |
| Mathematical Expression 14 | 1.2 < CA_max / CA_Aver < 1.5 | 1.427 |
| Mathematical Expression 15 | 0.2 < CA_min / CA_Aver < 0.8 | 0.746 |
| Mathematical Expression 16 | 0.2 < CA_max / (2*ImgH) < 1 | 0.853 |
| Mathematical Expression 17 | 1 < f / L1R1 < 2 | 1.306 |
| Mathematical Expression 18 | 0.5 < EPD / L1R1 < 1 | 0.629 |
| Mathematical Expression 19 | 0.1 < \|f1 / f2\| < 0.5 | 0.396 |
| Mathematical Expression 20 | 6 < TTL < 8 | 7.034 |
| Mathematical Expression 21 | 2 < ImgH < 4 | 3.090 |
| Mathematical Expression 22 | 1 < BFL < 2.5 | 1.851 |
| Mathematical Expression 23 | 2 < F < 5 | 4.984 |
| Mathematical Expression 24 | 25 < FOV < 35 | 30.999 |
| Mathematical Expression 25 | 1 < TTL / CA_max < 1.5 | 1.335 |
| Mathematical Expression 26 | 2 < TTL / ImgH < 2.5 | 2.276 |
| Mathematical Expression 27 | 0.2 < BFL / ImgH < 0.7 | 0.599 |
| Mathematical Expression 28 | 3.5 < TTL / BFL < 4 | 3.799 |
| Mathematical Expression 29 | 0.5 < F / TTL < 1 | 0.708 |
| Mathematical Expression 30 | 2.5 < F / BFL < 3 | 2.692 |
| Mathematical Expression 31 | 1.3 < F / ImgH < 1.8 | 1.613 |
| Mathematical Expression 32 | 2 < F / EPD < 2.5 | 2.075 |
| Mathematical Expression 33 | 1.8 < Fno < 2.2 | 2.0900 |
| Mathematical Expression 34 | v1 < v2 | |
| Mathematical Expression 35 | 10 < v1 < 20 | 19.4000 |
| Mathematical Expression 36 | 50 < v2 < 60 | 55.7107 |

Referring to Table 16, it can be seen that the optical system (1000) according to this first embodiment satisfies at least one of Mathematical Expression 1 to Mathematical Expression 36. More specifically, it can be seen that the optical system (1000) according to this first embodiment satisfies all the Mathematical Expressions from Mathematical Expression 1 to Mathematical Expression 36.

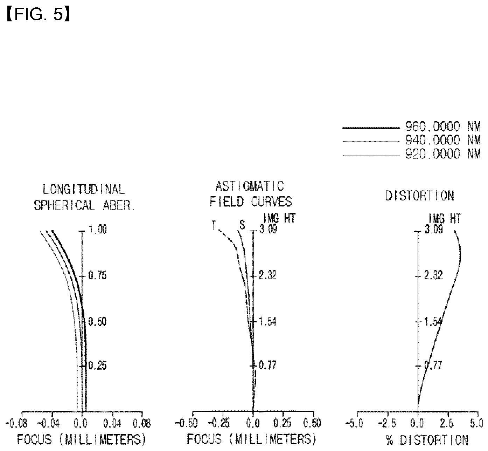

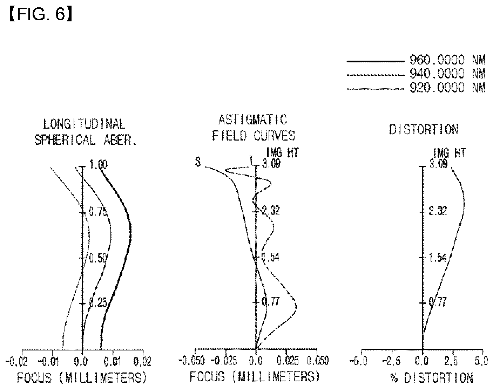

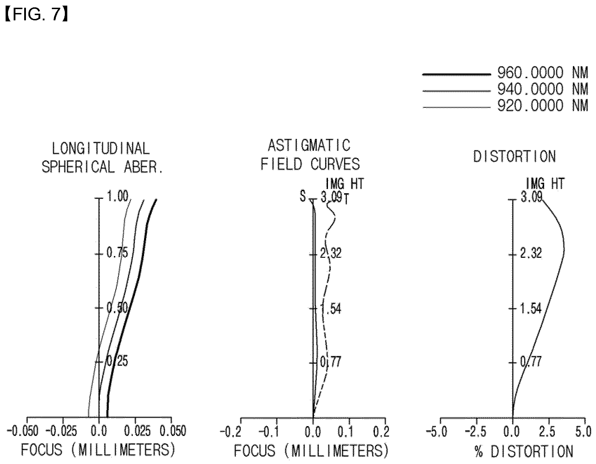

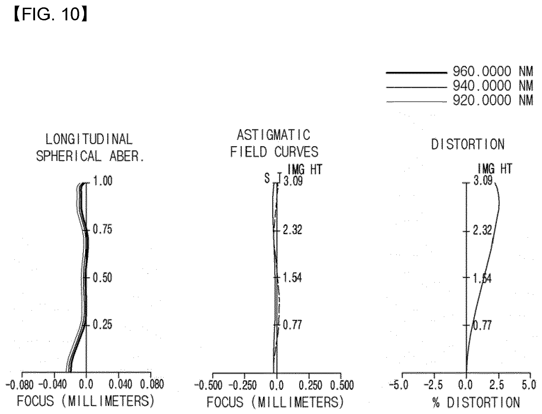

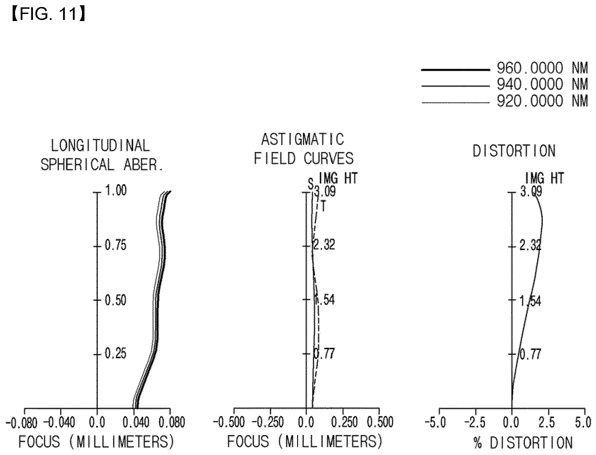

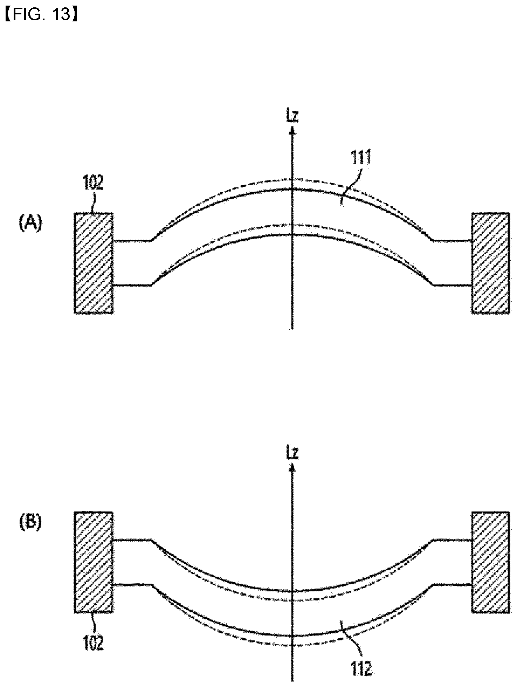

Accordingly, the optical system (1000) according to this first embodiment may have an angle of view of within 30 degrees (30±1 degrees) over a temperature range of low temperature (-40°C) to high temperature (85°C), and may have optical properties as shown in FIG. 5 to FIG. 13.

FIGS. 5, 6, and 7, respectively, are graphs of aberrations of an optical system 1000 in low temperature (-40°C), room temperature (20°C), and high temperature (85°C) environments, measuring, from left to right, Longitudinal Spherical Aberration, Astigmatic Field Curves, and Distortion. In FIGS. 5, 6, and 7, the X-axis may represent the focal length (mm) or distortion (%), and the Y-axis may represent the height of the image. Further, the graphs for spherical aberration are graphs for light in the wavelength bands of about 920 nm, about 940 nm, and about 960 nm, and the graphs for non-point aberration and distortion aberration are graphs for light in the wavelength band of 940 nm.

In the aberration diagrams of FIGS. 5, 6 and 7, it can be interpreted that the closer each curve is to the y-axis, the better the aberration correction function. Referring to FIGS. 5, 6 and 7, it can be seen that the optical system (1000) according to the present first embodiment has measured values adjacent to the y-axis in almost all areas.

In other words, the optical system (1000) according to this first embodiment can maintain good optical properties over a wide range of temperatures. More specifically, the optical system (1000) may comprise a first lens (100) made of the same plastic material as the second lens (120) and the third lens (300).

In this case, the first to third lenses (100, 200, 300) according to the first exemplary embodiment may be provided with a set refractive index, shape, thickness, etc. to mutually compensate for changes in focal length caused by changes in refractive index that vary with temperature. Thus, the optical system (1000) can prevent or minimize changes in optical properties in a temperature range from low temperature (-40°C) to high temperature (85°C), and can maintain improved optical properties.

The optical system according to the present second embodiment will be described in detail below.

An optical system (1500) according to a second exemplary embodiment may include a plurality of lenses (100, 200, 300) and an image sensor (600). More specifically, the optical system (1500) according to the second exemplary embodiment may include more than two lenses. For example, the optical system (1500) may include a three-element (sheet) lens, and may include a first lens (100), a second lens (200), a third lens (300), and an image sensor (600) disposed sequentially from the object side to the sensor side. The first to third lenses (100, 200, 300) may be sequentially disposed along the optical axis (OA) of the optical system (1500).

In this case, light corresponding to information about an object may pass through the first lens (100), second lens (200), and third lens (300) and be incident on the image sensor (600).

Each of the plurality of lenses (100, 200, 300) may include an effective region and an ineffective region. The effective region may be the region through which light incident on each of the first to third lenses (100, 200, 300) passes. In other words, the effective region may be the region through which the incident light is refracted to produce optical properties. The effective region may be the clear aperture region.

The ineffective region may be disposed around the perimeter of the effective region. The ineffective region may be a region where no light is incident, i.e., the ineffective region may be a region that is irrelevant to the optical properties. Further, the non-effective area may be an area fixed to a barrel (not shown) that houses the lens. The non-effective region may be a non-clear aperture region.

The image sensor (600) may detect light. More specifically, the image sensor (600) may detect light that has passed sequentially through a plurality of lenses, more specifically, the first to third lenses (100, 200, 300). The image sensor (600) may include an element capable of detecting incident light, such as a charge coupled device (CCD) or a complementary metal oxide semiconductor (CMOS).

The image sensor (600) may include a plurality of pixels having a set size. For example, the pixel size of the image sensor (600) may be about 3 $\mu$m. The image sensor (600) can detect light of a set wavelength. For example, the image sensor (600) may detect infrared ray (IR) light. More specifically, the image sensor (600) can detect near infrared ray light below about 1500 nm. For example, the image sensor may detect light in a wavelength band from about 880 nm to about 1000 nm.

The optical system (1500) according to the second exemplary embodiment may further include a cover glass (400) and a filter (500).

The cover glass (400) may be disposed between the plurality of lenses (100, 200, 300) and the image sensor (600). The cover glass (400) may be disposed adjacent to the image sensor (600). The cover glass (400) may have a shape corresponding to the image sensor (600). The cover glass (400) may be larger than or the same size as the image sensor (600) to protect the top of the image sensor (600).

Additionally, a filter (500) may be disposed between the plurality of lenses (100, 200, 300) and the image sensor (600). The filter (500) may be disposed between the image sensor (600) and the last lens (third lens 300) of the plurality of lenses (100, 200, 300) that is closest to the image sensor (600). More specifically, the filter (500) may be disposed between the cover glass (400) and the image sensor (600).

The filter (500) can pass light in a set wavelength band and filter light in a different wavelength band. The filter (500) can pass light in a wavelength band that corresponds to the light received by the image sensor (600), and can block light in a wavelength band that does not correspond to the light received. Specifically, the filter (500) can pass light in the infrared wavelength band and block light in the ultraviolet and visible wavelength bands. For example, the filter (500) may include at least one of an IR pass filter and an IR cutoff filter.

The optical system (1500) according to the second exemplary embodiment may include an aperture (STOP). The aperture (STOP) may be disposed between the first lens (100) and the second lens (200). The aperture (STOP) may be disposed closer to the first lens (100) than the second lens (200). The aperture (STOP) may be spaced apart from the object side of the second lens (200). The aperture (STOP) may adjust the amount of light incident on the subject. The aperture (STOP) may control the amount of light that passes through the first lens (100). The aperture (STOP) can control the amount of light entering the third lens (300). The aperture (STOP) may include an aperture.

The optical system according to the second exemplary embodiment may have improved optical properties by disposing an aperture between the first lens (100) having a high index of refraction and the second lens (200) having a low index of refraction.

Referring now to Table 17, a plurality of lenses according to this second embodiment will be described in more detail below.

[Table 17]

| lens | surface | Radius of curvature(mm) | Thickness or distance(mm) | Refractive index | Abbe number | Clear aperture size |
|---|---|---|---|---|---|---|
| First lens | First surface (S1) | 2.398 | 1.331 | 1.5350 | 55.7000 | 2.809 |
| | Second surface (S2) | 176.549 | 0.040 | | | 2.080 |
| STOP | - | infinity | 1.089 | | | 2.000 |
| Second lens | Third surface (S3) | -2.292 | 1.602 | 1.6714 | 19.2000 | 2.387 |
| | Fourth surface (S4) | -1.515 | 0.115 | | | 3.571 |
| Third lens | Fifth surface (S5) | 17.782 | 0.910 | 1.5350 | 55.7000 | 4.594 |
| | Sixth surface (S6) | 1.736 | 0.333 | | | 5.477 |
| filter | | infinity | 0.300 | | | 5.669 |
| | | infinity | 0.750 | | | 6.029 |
| Cover glass | | infinity | 0.400 | | | 6.155 |
| Image sensor | | infinity | 0.045 | | | 6.181 |

Table 17 shows the Radius of Curvature, Thickness of each lens at the optical axis (OA), Distance between each lens at the optical axis (OA), Refractive index for light in the d-line (587.562 mm) wavelength band, Abbe's Number, and size of Clear aperture (CA) of the first to third lenses (100, 200, 300) according to the second exemplary embodiment. Here, the lens data listed in Table 1 are at room temperature (approximately 20°C).

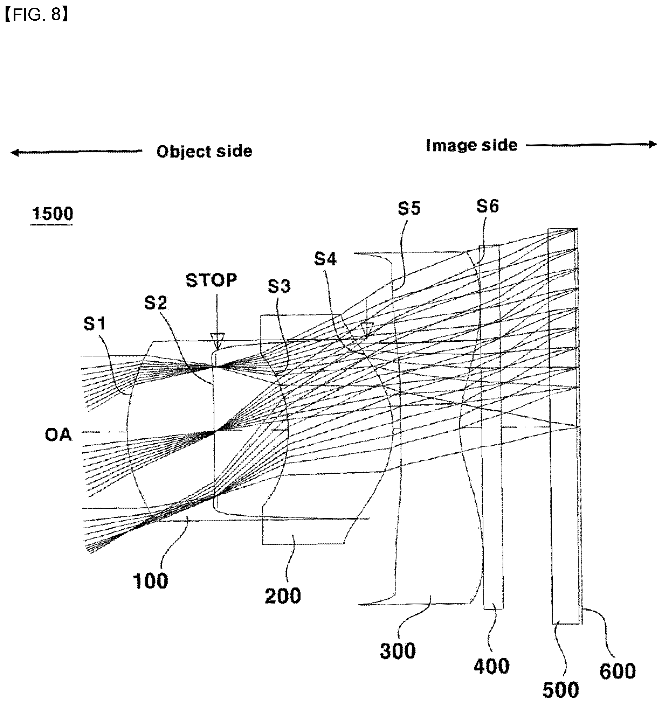

Referring to FIG. 8 and Table 17, the first lens (100) of the optical system (1500) according to the second exemplary embodiment may have a plastic material and may have a positive (+) refractive force in the optical axis OA. Further, in the optical axis (OA), the first surface (S1) of the first lens (100) may have a convex shape, and the second surface (S2) may be concave. The first lens (100) may have a meniscus shape that is convex from the optical axis (OA) towards the object. Further, the first surface (S1) of the first lens (100) may have a convex shape in the optical axis (OA) and the second surface (S2) may have a convex shape. The first lens (100) may have a convex shape on both sides in the optical axis (OA).

At least one of the first surface (S1) and the second surface (S2) may be aspherical. For example, both the first surface (S1) and the second surface (S2) may be aspherical. The first surface (S1) may include at least one inflection point. The first surface (S1) may include at least one inflection point in a flange region, which is a region other than the clear aperture region. The second surface (S2) may include at least one inflection point. The second surface (S2) may include at least one inflection point within the clear aperture region.

The second lens (200) may have a positive (+) or negative (-) refractive power in the optical axis (OA). The second lens (200) may be made of a plastic material.

The second lens (200) may include a third surface (S3), defined as an object side, and a fourth surface (S4), defined as a sensor side. The third surface (S3) may have a convex shape in the optical axis (OA) and the fourth surface (S4) may be concave in the optical axis (OA), i.e., the second lens (200) may have a meniscus shape that is convex from the optical axis (OA) to the object side. Alternatively, the third surface (S3) may have a convex shape in the optical axis (OA) and the fourth surface (S4) may be convex, i.e., the second lens (200) may have a convex shape on both sides in the optical axis (OA). Alternatively, the third surface (S3) may have a concave shape in the optical axis (OA) and the fourth surface (S4) may be convex in the optical axis (OA), i.e., the second lens (200) may have a meniscus shape that is convex in the optical axis (OA) towards the sensor. In contrast, the third surface (S3) may have a concave shape in the optical axis (OA) and the fourth surface (S4) may be concave in the optical axis (OA), i.e., the second lens (200) may have a concave shape on both sides in the optical axis (OA). The fourth surface (S4) may include at least one inflection point. The fourth surface (S4) may include at least one inflection point within the clear aperture area.

At least one of the third surface (S3) and the fourth surface (S4) may be an asphere. For example, both the third surface (S3) and the fourth surface (S4) may be aspherical.

The third lens (300) may have a positive (+) or negative (-) refractive power in the optical axis (OA). The third lens (300) may be made of a plastic material.

The third lens (300) may include a fifth surface (S5), defined as the object side, and a sixth surface (S6), defined as the sensor side. The fifth surface (S5) may have a convex shape in the optical axis (OA) and the sixth surface (S6) may be concave in the optical axis (OA), i.e., the third lens (300) may have a meniscus shape that is convex from the optical axis (OA) to the object side. Alternatively, the fifth surface (S5) may have a convex shape in the optical axis (OA) and the sixth surface (S6) may be convex in the optical axis (OA), i.e., the third lens (300) may have a convex shape on both sides in the optical axis (OA). Alternatively, the fifth surface (S5) may have a concave shape in the optical axis (OA) and the sixth surface (S6) may be convex in the optical axis (OA), i.e., the third lens (300) may have a meniscus shape that is convex in the optical axis (OA) towards the sensor. In contrast, the fifth surface (S5) may have a concave shape in the optical axis (OA) and the sixth surface (S6) may be concave in the optical axis (OA), i.e., the third lens (300) may have a concave shape on both sides in the optical axis (OA). The fifth surface (S5) may include at least one inflection point. The fifth surface (S5) may include at least one inflection point in a flange region, which is a region other than the clear aperture region. The sixth surface (S6) may include at least one inflection point. The sixth surface (S6) may include at least one inflection point within the clear aperture region.

At least one of the fifth surface (S5) and the sixth surface (S6) may be an asphere. For example, both the fifth surface (S5) and the sixth surface (S6) may be aspherical.

The following Table 18 provides data on the refractive index of the first to third lenses (100, 200, 300) for various wavelengths of light over a temperature range from low (-40°C) to high (85°C).

[Table 18]

| d-line 587.562 | | | |
|---|---|---|---|
| Temperature | First lens | Second lens | Third lens |
| -40 | 1.5412 | 1.6785 | 1.5412 |
| -20 | 1.5392 | 1.6761 | 1.5392 |
| -18 | 1.5386 | 1.6759 | 1.5386 |
| 0 | 1.5372 | 1.6737 | 1.5372 |
| 20 | 1.5348 | 1.6714 | 1.5348 |
| 40 | 1.5334 | 1.6690 | 1.5334 |
| 60 | 1.5310 | 1.6667 | 1.5310 |
| 80 | 1.5292 | 1.6643 | 1.5292 |
| 85 | 1.5287 | 1.6637 | 1.5287 |

Referring to Table 18, the first lens (100), the second lens (200), and the third lens (300) may have different refractive index change characteristics as the temperature changes.

The first lens (100) and the third lens (300) may have the same refractive index, and the second lens (200) may have a different refractive index than the refractive index of the first lens (100) and the third lens (300). The refractive index of the first lens (100) and the third lens (300) may have a smaller value than the refractive index of the second lens (200).

Furthermore, referring to Table 18, it can be seen that the first to third lenses (100, 200, 300) have very small temperature-dependent refractive indices in the temperature range of low temperature (about -40°C) to high temperature (about 85°C). In particular, it can be seen that the change in refractive index (dnt_1/dt, dnt_2/dt, dnt_3/dt) of the first to third lenses (100, 200, 300) with temperature change is negative.

The following Table 19 is Sag data according to the vertical height (0.2mm interval) of the optical axis (OA) of the object side (first surface S1) and the sensor side (second surface S2) of the first lens (100) at room temperature (about 20°C).

Furthermore, Table 20 is data for lens thickness based on the vertical height of the optical axis (OA) at room temperature (about 20°C). Specifically, D_1 in Table 20 is the center thickness of the first lens (100), which is the thickness (mm) at the optical axis (OA) of the first lens (100). Further, D_1_ET in Table 20 refers to the thickness (mm) in the direction of the optical axis (OA) at the distal end of the effective region of the first lens (100). More specifically, it means a distance (mm) in the optical axis (OA) direction between the distal end of the effective region of the object side (first surface S1) of the first lens (100) and the distal end of the effective region of the sensor side (second surface S2) of the first lens (100).

[Table 19]

| Vertical height of the optical axis from the object side of the first lens (mm) | Sag on object side of the first lens (mm) | Vertical height of the optical axis from the sensor side of the first lens (mm) | Sag on sensor side of first lens(mm) |
|---|---|---|---|
| 0 | 0 | 0 | 0 |
| 0.2 | 0.008342 | 0.2 | 0.000096 |
| 0.4 | 0.033438 | 0.4 | 0.000177 |
| 0.6 | 0.075611 | 0.6 | -0.000522 |
| 0.8 | 0.135237 | 0.8 | -0.003683 |
| 1.0 | 0.212560 | 1.0 | -0.012856 |
| 1.2 | 0.306717 | - | - |
| 1.4 | 0.412283 | - | - |

[Table 20]

| Vertical height of the optical axis from the optical axis (mm) | Optical axis thickness of first lens (mm) |
|---|---|
| 0 | 1.33083 (D_1) |
| 0.2 | 1.32258 |
| 0.4 | 1.29757 |
| 0.6 | 1.25469 |
| 0.8 | 1.19191 |
| 1.0 | 1.10541 |
| 1.2 | 1.01218 |
| 1.4 | 3.08208(D_1_ET) |

[Table 21]

| Vertical height of the optical axis from the optical axis (mm) | Slope angle (degree)of the object side (first surface S1) of the first lens | Slope angle (degree) of the sensor side (second surface S2) of the first lens |
|---|---|---|
| 0 | 0 | 0 |
| 0.2 | 4.8 | 0 |

(continued)

| Vertical height of the optical axis from the optical axis (mm) | Slope angle (degree) of the object side (first surface S1) of the first lens | Slope angle (degree) of the sensor side (second surface S2) of the first lens |
|---|---|---|
| 0.4 | 9.5 | 0 |
| 0.6 | 14.3 | -0.4 |
| 0.8 | 18.9 | -1.5 |
| 1.0 | 23.3 | -4.0 |
| 1.2 | 26.9 | - |
| 1.4 | 27.8 | - |

Referring to Table 19 and Table 20, the thickness in the optical axis (OA) direction of the first lens (100) may become thinner from the optical axis (OA) towards the distal end of the clear aperture of the first lens (100). Specifically, the thickness in the optical axis (OA) direction of the first lens (100) may have a maximum value at the optical axis (OA) in a range from the optical axis (OA) to the end of the clear aperture of the second surface (S2), and a minimum value at the end of the clear aperture of the second surface (S2).

Furthermore, Table 21 is data of the slope angle (degree) of the object side (first surface S1) of the first lens and the sensor side (second surface S2) of the first lens according to the height (0.2mm interval) of the vertical direction of the optical axis (OA) at room temperature (about 20°C). The slope angle means the angle formed by the tangent line tangential to the lens face and the line perpendicular to the optical axis (OA).

Accordingly, the first lens (100) may have improved aberration control characteristics by controlling the incident light.

The following Table 22 is Sag data according to the vertical height (0.2mm interval) of the optical axis (OA) of the object side (S3) and the sensor side (S4) of the second lens (200) at room temperature (about 20°C).

Furthermore, Table 23 shows the data for the lens thickness based on the vertical height of the optical axis (OA) at room temperature (about 20°C). Specifically, $D\_2$ in Table 23 is the center thickness of the second lens (200), which is the thickness (mm) at the optical axis (OA) of the second lens (200). Further, $D\_2\_ET$ in Table 23 means the thickness (mm) in the direction of the optical axis (OA) at the distal end of the effective region of the second lens (200). More specifically, it means a distance (mm) in the optical axis (OA) direction between the distal end of the effective region of the object side (third surface S3) of the second lens (200) and the distal end of the effective region of the sensor side (fourth surface S4) of the second lens (200).

[Table 22]

| Vertical height of the optical axis from the object side of the second lens (mm) | Sag on the object side in the second lens (mm) | Vertical height of the optical axis from the sensor side of the second lens (mm) | Sag on the sensor side in the second lens (mm) |
|---|---|---|---|
| 0 | 0 | 0 | 0 |
| 0.2 | -0.008800 | 0.2 | -0.013178 |
| 0.4 | -0.036080 | 0.4 | -0.052372 |
| 0.6 | -0.084512 | 0.6 | -0.116462 |
| 0.8 | -0.158765 | 0.8 | -0.203590 |
| 1.0 | -0.264721 | 1.0 | -0.311458 |
| 1.2 | -0.410780 | 1.2 | -0.436542 |
| - | - | 1.4 | -0.570487 |
| - | - | 1.6 | -0.695283 |
| - | - | 1.7 | -0.745133 |

[Table 23]

| Vertical height of the optical axis from the optical axis (mm) | Optical axis thickness of the second lens (mm) |
|---|---|
| 0 | 1.602 (D_2) |
| 0.2 | 1.598 |
| 0.4 | 1.586 |
| 0.6 | 1.570 |
| 0.8 | 1.557 |
| 1.0 | 1.555 |
| 1.2 | 1.576 |
| 1.4 | 1.735 |
| 1.7 | 1.735 (D_2_ET) |

[Table 24]

| Vertical height of the optical axis from the optical axis (mm) | Slope angle (degree) of the object side of the second lens (third surface S3) | Slope angle (degree) of the sensor side of the second lens (fourth surface S4) |
|---|---|---|
| 0 | 0 | 0 |
| 0.2 | -5.1 | -7.8 |
| 0.4 | -10.5 | -14.5 |
| 0.6 | -16.8 | -20.8 |
| 0.8 | -24.0 | -26.1 |
| 1.0 | -31.8 | -30.4 |
| 1.2 | -40.5 | -33.3 |
| 1.4 | - | -33.7 |
| 1.6 | - | -29.1 |
| 1.8 | - | -12.5 |

Referring to Table 22 and Table 23, the thickness in the optical axis (OA) direction of the second lens (200) may decrease from the optical axis (OA) towards the distal end of the clear aperture of the second lens (200). More specifically, the thickness in the optical axis (OA) direction of the second lens (200) may have a maximum value at the optical axis (OA) in a range from the optical axis (OA) to the distal end of the clear aperture of the third surface (S3), and a minimum value at the distal end of the clear aperture of the third surface (S3).

Furthermore, Table 24 is data of a slope angle (degree) of the object side (fourth surface S4) of the second lens (200) and the sensor side (second surface S2) of the second lens (200) according to a vertical height (0.2mm interval) of the optical axis (OA) at room temperature (about 20°C). The slope angle means the angle formed by a tangent line tangential to the lens face and a line perpendicular to the optical axis (OA).

Accordingly, the second lens (200) can prevent or minimize temperature-dependent changes in optical properties in a temperature range from low to high temperatures.

The following Table 25 is Sag data according to the vertical height (0.2mm interval) of the optical axis (OA) of the object side (S5) and the sensor side (S6) of the third lens (300) at room temperature (about 20°C).

In addition, Table 26 shows data for lens thickness according to the vertical height of the optical axis (OA) at room temperature (about 20°C). Specifically, D_3 in Table 26 is the center thickness of the third lens (300), which is the thickness (mm) at the optical axis (OA) of the third lens (300). Further, D_3_ET in Table 26 means the thickness (mm) in the direction of the optical axis (OA) at the end of the effective region of the third lens (300). More specifically, it means a distance (mm) in the optical axis (OA) direction between the distal end of the effective region of the object side (S5) of the third lens (300) and the distal end of the effective region of the sensor side (S6) of the third lens (300).

[Table 25]

| Vertical height of the optical axis from the object side of the third lens (mm) | Sag on the object side of the third lens (mm) | Vertical height of the optical axis from the sensor side of the third lens (mm) | Sag on the sensor side of the third lens(mm) |
|---|---|---|---|
| 0 | 0 | 0 | 0 |
| 0.2 | 0.001002 | 0.2 | 0.011272 |
| 0.4 | 0.002719 | 0.4 | 0.042387 |
| 0.6 | 0.002323 | 0.6 | 0.086840 |
| 0.8 | -0.002663 | 0.8 | 0.137449 |
| 1.0 | -0.013447 | 1.0 | 0.188413 |
| 1.2 | -0.029788 | 1.2 | 0.235607 |
| 1.4 | -0.049507 | 1.4 | 0.275934 |
| 1.6 | -0.068631 | 1.6 | 0.306826 |
| 1.8 | -0.083569 | 1.8 | 0.326159 |
| 2.0 | -0.093438 | 2.0 | 0.331788 |
| 2.2 | -0.100106 | 2.2 | 0.320061 |
| 2.3 | -0.102119 | 2.4 | 0.283972 |
| - | - | 2.6 | 0.211097 |
| - | - | 2.7 | 0.154880 |

[Table 26]

| Vertical height of the optical axis from the optical axis (mm) | Optical axis thickness of the third lens (mm) |
|---|---|
| 0 | 0.910 (D_3) |
| 0.2 | 0.920 |
| 0.4 | 0.950 |
| 0.6 | 0.855 |
| 0.8 | 1.050 |
| 1.0 | 1.112 |
| 1.2 | 1.175 |
| 1.4 | 1.235 |
| 1.6 | 1.285 |
| 1.8 | 1.320 |
| 2.0 | 1.335 |
| 2.2 | 1.330 |
| 2.4 | 1.295 |
| 2.6 | 1.254 |
| 2.7 | 1.459 (D_3_ET) |

[Table 27]

| Vertical height of the optical axis from the optical axis (mm) | Slope angle (degree) of the object side of the 3rd lens (fifth surface S5) | Slope angle (degree) of the sensor side of the third lens (sixth surface S6) (degree) |
|---|---|---|
| 0 | 0 | 0 |
| 0.2 | 0.5 | 6.3 |
| 0.4 | 0.3 | 11.0 |
| 0.6 | -0.7 | 13.7 |
| 0.8 | -2.2 | 14.5 |
| 1.0 | -3.9 | 13.9 |
| 1.2 | -5.3 | 12.5 |
| 1.4 | -5.8 | 10.2 |
| 1.6 | -5.0 | 7.2 |
| 1.8 | -3.5 | 3.7 |
| 2.0 | -2.2 | -0.6 |
| 2.2 | -1.6 | -6.4 |
| 2.3 | -0.5 | -10.1 |
| 2.4 | - | -14.5 |
| 2.6 | - | -26.0 |
| 2.7 | - | -32.6 |

Referring to Table 25 and Table 26, the thickness in the optical axis (OA) direction of the third lens (300) may increase from the optical axis (OA) towards the distal end of the clear aperture of the third lens (300). Specifically, the thickness in the optical axis (OA) direction of the third lens (300) may have a maximum value at the distal end of the clear aperture of the fifth surface (S5) in a range from the optical axis (OA) to the distal end of the clear aperture of the fifth surface (S5), and a minimum value at the optical axis (OA).

Furthermore, Table 27 is data of a slope angle (degree) of the object side (fifth surface S5) of the third lens (300) and the sensor side (the sixth surface S6) of the third lens (300) according to a vertical height (0.2mm interval) of the optical axis (OA) at room temperature (about 20°C). The slope angle means the angle formed by a tangent line tangential to the lens plane and a line perpendicular to the optical axis (OA).

Accordingly, the third lens (300) can prevent or minimize the change of optical properties with temperature in a temperature range from low to high temperature.

In the optical system (1500) according to the second exemplary embodiment, the values of the aspheric coefficient of each lens face are as shown in Table 28 below.

[Table 28]

|  | First surface (S1) | Second surface (S2) | Third surface (S3) | Fourth surface (S4) | Fifth surface (S5) | Sixth surface (S6) |
|---|---|---|---|---|---|---|
| Y | 2.3978 | 176.5490 | -2.2922 | -1.5147 | 17.7823 | 1.7362 |
| K | 0.0626 | -90.8230 | 1.6786 | -0.6320 | 13.1395 | -5.2002 |
| A | -0.0105 | -0.0115 | -0.0196 | 0.0292 | -0.0793 | -0.0582 |
| B | 0.0374 | 0.0209 | 0.0229 | 0.0121 | 0.0658 | 0.0298 |
| C | -0.1212 | -0.1702 | -0.0561 | -0.0151 | -0.0450 | -0.0122 |
| D | 0.2192 | 0.5538 | 0.0838 | 0.0089 | 0.0229 | 0.0033 |
| E | -0.2473 | -0.8539 | -0.0510 | -0.0021 | -0.0078 | -0.0006 |
| F | 0.1759 | 0.8590 | 0.0120 | 0.0002 | 0.0017 | 0.0001 |

(continued)

| | First surface (S1) | Second surface (S2) | Third surface (S3) | Fourth surface (S4) | Fifth surface (S5) | Sixth surface (S6) |
|---|---|---|---|---|---|---|
| G | -7.70E-02 | -5.28E-01 | | | -2.30E-04 | -2.76E-06 |
| H | 1.89E-02 | 1.15E-01 | | | 1.76E-05 | 5.70E-09 |
| J | -2.00E-03 | | | | -5.83E-07 | 3.22E-09 |

Further, in the optical system (1500) according to the second exemplary embodiment, the distance (first distance) between the first lens (100) and the second lens (200) may be as shown in the following Table 29 at room temperature (about 20°C).

[Table 29]

| Vertical height of the optical axis from the sensor side of the first lens (mm) | Optical axis distance from the sensor side of the first lens to the object side of the aperture (mm) | Optical axis distance from the sensor side of the aperture to the object side of the second lens (mm) | Vertical height of the optical axis from the object side of the second lens (mm) |
|---|---|---|---|
| 0 | 0.040 | 1.602 | 0 |
| 0.2 | 0.040 | 1.598 | 0.2 |
| 0.4 | 0.040 | 1.586 | 0.4 |
| 0.6 | 0.041 | 1.570 | 0.6 |
| 0.8 | 0.044 | 1.557 | 0.8 |
| 1.0(L1) | 0.053 | 1.555 | 1.0(L1) |

Referring to Table 29, the first distance (d12) may mean a distance in the optical axis direction from a sensor side of the first lens to an object side of the second lens. The first distance (d12) may be the sum of the distance in the optical axis direction from the sensor side of the first lens to the object side of the aperture and the distance in the optical axis direction from the sensor side of the aperture to the object side of the second lens. The first distance (d12) may be a first air gap (d12).

The first distance may decrease from the optical axis (OA) to a first point (L1), which is the distal end of the clear aperture of the second surface (S2). Here, the value meant by the first point (L1) is an approximate value of the effective radius value of the second surface (S2) of the sensor side (second surface S2) of the first lens (100) and the object side (third surface S3) of the second lens (200) facing each other, which is an approximate value of 1/2 of the effective radius value of the second surface (S2) listed in Table 3.

The first distance may have a maximum value at the optical axis (OA) and a minimum value at the first point (L1). The maximum value of the first distance may be from about 1 to about 1.3 times the minimum value. For example, in the second exemplary embodiment, the maximum value of the first distance may be about 1.03 times the minimum value.

Further, in the optical system (1500) according to the second exemplary embodiment, the distance (second distance) between the second lens (200) and the third lens (300) may be as shown in the following Table 30 at room temperature (about 20°C).

[Table 30]

| Vertical height of the optical axis from the sensor side of the second lens (mm) | Optical axis distance (mm) of second air gap (d23) (second distance) | Vertical height of the optical axis from the object side of the third lens (mm) |
|---|---|---|
| 0 | 0.115 | 0 |
| 0.2 | 0.129 | 0.2 |
| 0.4 | 0.170 | 0.4 |
| 0.6 | 0.234 | 0.6 |

(continued)

| Vertical height of the optical axis from the sensor side of the second lens (mm) | Optical axis distance (mm) of second air gap (d23) (second distance) | Vertical height of the optical axis from the object side of the third lens (mm) |
|---|---|---|
| 0.8 | 0.316 | 0.8 |
| 1.0 | 0.413 | 1.0 |
| 1.2 | 0.522 | 1.2 |
| 1.4 | 0.636 | 1.4 |
| 1.6 | 0.742 | 1.6 |
| 1.7(L2) | 0.783 | 1.7(L2) |

Referring to Table 30, the second distance (d23) may refer to an optical axis direction from the sensor side of the second lens to the object side of the third lens. The second distance (d23) may be a second air gap (d23).

The second distance may increase from the optical axis (OA) to a second point (L2), which is the distal end of the clear aperture of the fourth surface (S4). Here, the value meant by the second point (L2) is an approximate value of the effective radius value of the fourth surface (S4) of the sensor side (fourth surface S4) of the second lens (200) facing each other and the object side (fifth surface S5) of the third lens (300), which has a smaller effective radius size, and is an approximate value of 1/2 of the effective radius value of the fourth surface (S4) listed in Table 3.

The second distance may have a maximum value at the second point (L2) and a minimum value at the optical axis (OA). The maximum value of the second distance may be from about 6 times to about 8 times the minimum value. For example, in the second exemplary embodiment, the maximum value of the second distance may be about 6.8 times the minimum value.

The optical system (1500) according to the second exemplary embodiment may satisfy at least one of the mathematical expressions described below. Accordingly, the optical system (1500) according to the second exemplary embodiment can prevent or minimize temperature-dependent changes in optical properties over a temperature range from low to high temperatures, thereby enabling improved optical properties over a range of temperatures. In addition, the optical system (1500) according to embodiments may have improved distortion and aberration characteristics at various temperatures by satisfying at least one of the mathematical expressions described later. The terms used in some of the mathematical expressions will be explained with reference to FIG. 21.

# [Mathematical Expression 1]

## $1.2 < L1\_CT / L1\_ET < 1.6$

In Mathematical Expression 1, L1_CT is the center thickness of the first lens (100) at room temperature (about 20°C), which is the thickness (mm) in the optical axis (OA) direction of the first lens (100) at room temperature (about 20°C). Further, L1_ET means a thickness (mm) in the direction of the optical axis (OA) at the distal end of the effective region of the first lens (100) at room temperature (about 20°C).

More specifically, L1_ET means the distance (mm) in the optical axis (OA) direction between the distal end of the effective region on the object side (first surface S1) of the first lens (100) and the distal end of the effective region on the sensor side (second surface S2) of the first lens (100). L1_ET may be the thickness of the flange outside the clear aperture of the first lens (100).

When the optical system (1500) according to an embodiment satisfies the Mathematical Expression 1, the optical system (1500) may have improved chromatic aberration reduction characteristics.

# [Mathematical Expression 2]

## $1 < L3\_ET / L3\_CT < 1.5$

In Mathematical Expression 2, L3_CT is the center thickness of the third lens (300) at room temperature (approximately 20°C), in mm, in the optical axis (OA) direction of the third lens (300). Furthermore, L3_ET refers to the thickness (mm) in the direction of the optical axis (OA) at the distal end of the effective region of the third lens (300) at room temperature (about 20°C). More specifically, L3_ET refers to the distance (mm) in the optical axis (OA) direction between the distal end of the effective region on the object side (S5) of the third lens (300) and the distal end of the effective region on the sensor side (S6) of the third lens (100). L3_ET may be the thickness of the flange outside the clear aperture of the third lens (300).

If the optical system (1500) according to an embodiment satisfies the Mathematical Expression 2, the optical system (1500) may have improved aberration reduction characteristics.

[Mathematical Expression 3]

$$1.6 < n2 < 1.7$$

In Mathematical Expression 3, n2 is the refractive index for light in the d-line (587.6 nm) wavelength band of the second lens 200.

[Mathematical Expression 4]

$$1.2 < L3S2\_max\_sag \text{ to Sensor} < 1.8$$

In Mathematical Expression 4, L3S2_max_sag to Sensor means the distance (mm) in the optical axis (OA) direction from a point that is the maximum Sag value of the sensor side (S6) of the third lens (300) to the image sensor 600.

[Mathematical Expression 5]

$$1 < BFL / L3S2\_max\_sag \text{ to Sensor} < 1.5$$

In Mathematical Expression 5, L3S2_max_sag to Sensor means the distance (mm) in the optical axis (OA) direction from a point that is the maximum Sag value of the sensor side (S6) of the third lens (300) to the image sensor (600). BFL (Back focal length) is a distance (mm) in the optical axis (OA) from the apex of the sensor side of the lens closest to the image sensor (600) to the upper surface of the image sensor (600) at room temperature (about 20°C).

[Mathematical Expression 6]

$$30 < |L3S2\_max \text{ slope}| < 35$$

In Mathematical Expression 6, L3S2_max slope means the maximum of the angles that a tangent line tangent to the sensor side of the third lens makes with a line perpendicular to the optical axis (OA).
If the optical system (1500) according to an embodiment satisfies the Mathematical Expression 6, the optical system (1500) may minimize the flare phenomenon.

[Mathematical Expression 7]

$$6 < d23\_max / d23\_CT < 7$$

In Mathematical Expression 7, d23_CT is the distance (mm) from the optical axis (OA) from the sensor side (S4) of the second lens (200) to the object side (S5) of the third lens (300) at room temperature (approx. 20°C). Furthermore, d23_max is a distance (mm) between the largest of the distances from the sensor side (fourth surface S4) of the second lens (200) to the object side (fifth surface S5) of the third lens (300) at room temperature (about 20°C).
When the optical system (1500) according to an embodiment satisfies the Mathematical Expression 7, the optical system (1500) may have improved peripheral, chromatic, and distortion aberration characteristics of the field of view.

## [Mathematical Expression 8]

$$1 < L3\_ET / L3\_CT < 1.5$$

In Mathematical Expression 8, L3_CT is the center thickness of the third lens (300) at room temperature (approximately 20°C), in mm, in the optical axis (OA) direction of the third lens (300). Furthermore, L3_ET refers to the thickness (mm) in the direction of the optical axis (OA) at the end of the effective region of the third lens (300) at room temperature (about 20°C). More specifically, L3_ET refers to the distance (mm) in the optical axis (OA) direction between the distal end of the effective region on the object side (S5) of the third lens (300) and the distal end of the effective region on the sensor side (S6) of the third lens (100). L3_ET may be a flange thickness on the outer side of the clear aperture of the third lens (300).

## [Mathematical Expression 9]

$$1 < L2\_CT / L1\_CT < 1.5$$

In Mathematical Expression 9, L2_CT means the center thickness of the second lens in the optical axis (OA) direction at room temperature (approx. 20°C). Also, L1_CT means the center thickness of the first lens in the optical axis (OA) direction at room temperature (approx. 20°C).

## [Mathematical Expression 10]

$$1.2 < L2R1 / L2R2 < 1.7$$

In Mathematical Expression 10, L2R1 is a radius of curvature of the object side (third surface S3) of the second lens (200) at room temperature (about 20°C), and L2R2 is a radius of curvature of the sensor side (fourth surface S4) of the second lens (200) at room temperature (about 20°C).
When the optical system (1500) according to an embodiment satisfies the Mathematical Expression 10, the optical system (1500) may have improved aberration control characteristics.

## [Mathematical Expression 11]

$$1 < CA\_L1S1 / CA\_L1S2 < 1.5$$

In Mathematical Expression 11, CA_L1S1 is the size of the clear aperture (CA, Clear Aperture) of the object side (first surface S1) of the first lens (100) at room temperature (about 20°C), and CA_L1S2 is the size of the clear aperture of the sensor side (second surface S2) of the first lens (100) at room temperature (about 20°C).
If the optical system (1500) according to an embodiment satisfies the Mathematical Expression 11, the optical system (1500) can control the incident light and have a suitable size that can be provided in a slim and compact structure while maintaining optical performance.

## [Mathematical Expression 12]

$$1.2 < CA\_L2S2 / CA\_L2S1 < 1.7$$

In Mathematical Expression 12, CA_L2S1 is the size of the clear aperture (CA) of the object side (third surface (S3) of the second lens (200) at room temperature (about 20°C), and CA_L2S2 is the size of the clear aperture of the sensor side (fourth surface S4) of the second lens (200) at room temperature (about 20°C).

## [Mathematical Expression 13]

$$1 < d23\_CT / d23\_ET < 1.5$$

In Mathematical Expression 13, d23_CT is the distance (mm) between the second lens and the third lens in the optical axis (OA) direction at room temperature (approx. 20°C). Furthermore, d23_ET is the distance (mm) between the distal end of the effective region of the second lens (200) and the third lens (300) in the direction of the optical axis (OA) at room temperature (about 20°C).

## [Mathematical Expression 14]

$$1 < L\_CT\_Max / Air\_Max < 2$$

In Mathematical Expression 14, L CT_Max means the largest center thickness of the first to third lens in the optical axis (OA) direction. Further, Air_Max means the greater of the distance between the first and second lenses and the distance between the second and third lenses in the optical axis (OA) direction.

If the optical system (1500) according to an embodiment satisfies the Mathematical Expression 14, the optical system (1500) may have good optical performance and TTL reduction characteristics at a set field of view and focal length.

## [Mathematical Expression 15]

$$2.5 < \Sigma L\_CT / \Sigma Air\_CT < 3.5$$

In Mathematical Expression 15, ΣL_CT is the sum of the center thicknesses of the first to third lenses in the optical axis (OA) direction. Also, ΣAir_CT means the sum of the distance between the first and second lenses and the distance between the second and third lenses in the optical axis (OA) direction.

If the optical system (1500) according to an embodiment satisfies the Mathematical Expression 15, the optical system (1500) may have good optical performance and TTL reduction characteristics at a set field of view and focal length.

## [Mathematical Expression 16]

$$20 < \Sigma Abb / \Sigma Index < 30$$

In Mathematical Expression 16, ΣIndex is the sum of the refractive indices at the d-line of each of the first to third lenses at room temperature (approximately 20°C). Also, ΣAbb means the sum of the Abbe's numbers of each of the first to third lenses at room temperature (about 20°C).

If the optical system (1500) according to an embodiment satisfies the Mathematical Expression 16, the optical system (1500) may have improved aberration characteristics and resolution in a temperature range from low to high temperatures.

If the optical system (1500) according to an embodiment satisfies the Mathematical Expression 16, the optical system (1500) may have improved aberration characteristics and resolution.

## [Mathematical Expression 17]

$$2 < |Max\_distortion| < 3$$

In Equation 17, Max_distortion may refer to a maximum value of optical distortion of the optical system (1500).

If the optical system (1500) according to an embodiment satisfies the Mathematical Expression 17, the optical system (1500) may have improved distortion characteristics.

## [Mathematical Expression 18]

$$0.2 < Air\_Edge\_Max / L\_CT\_Max < 0.7$$

In Mathematical Expression 18, Air_Edge_Max means the maximum value of the distance (mm) of the edge portion between the first lens (100) and the second lens (200) in the optical axis (OA) direction and the distance (mm) of the edge portion between the second lens (200) and the third lens (300) in the optical axis (OA) direction. Also, L

CT_Max means a maximum value of the center thickness of the first to third lenses (100, 200, 300) in the optical axis (OA) direction.

If the optical system (1500) according to an embodiment satisfies the Mathematical Expression 18, the optical system (1500) may have optical performance and TTL reduction structure characteristics.

[Mathematical Expression 19]

$$1 < CA\_L1S1 / CA\_min < 1.5$$

CA_L1S1 is the size of the clear aperture (CA) of the object side (first surface S1) of the first lens (100) at room temperature (about 20°C).

Further, CA_min is a clear aperture (CA) size of the lens face having the smallest clear aperture (CA) size at room temperature (about 20°C) among the lens faces of the plurality of lenses (100) included in the optical system (1500).

[Mathematical Expression 20]

$$2 < CA\_max / CA\_min < 3$$

In Mathematical Expression 20, CA_max is the clear aperture size (CA) of the lens face having the largest clear aperture size (CA) at room temperature (about 20°C) among the lens faces of the plurality of lenses (100, 200, 300) included in the optical system (1500).

Further, CA_min is the clear aperture (CA) size of the lens face having the smallest clear aperture (CA) size at room temperature (about 20°C) among the lens faces of the plurality of lenses (100, 200, 300) included in the optical system (1500).

If the optical system (1500) according to an embodiment satisfies the Mathematical Expression 20, the optical system (1500) may have optical performance and TTL reduction structural characteristics.

[Mathematical Expression 21]

$$1.4 < CA\_max / CA\_Aver < 2$$

In Mathematical Expression 21, CA_max is the clear aperture size (CA) of the lens face having the largest clear aperture size (CA) at room temperature (about 20°C) among the lens faces of the plurality of lenses (100, 200, 300) included in the optical system (1500).

Further, CA_Aver means an average (mm) of the clear aperture size (CA) at room temperature (about 20°C) of the lens faces (object side, sensor side) of the plurality of lenses (100, 200, 300) included in the optical system (1500).

If the optical system (1500) according to an embodiment satisfies the Mathematical Expression 21, the optical system (1500) may have optical performance and TTL reduction structure characteristics.

[Mathematical Expression 22]

$$0.2 < CA\_min / CA\_Aver < 0.8$$

In Mathematical Expression 22, CA_min is the clear aperture size (CA) of the lens face having the smallest clear aperture size (CA) at room temperature (about 20°C) among the lens faces of the plurality of lenses (100) included in the optical system (1500).

Further, CA_Aver means an average (mm) of the clear aperture size (CA) at room temperature (about 20°C) of the lens faces (object side, sensor side) of the plurality of lenses (100) included in the optical system (1500).

When the optical system (1500) according to an embodiment satisfies the Mathematical Expression 22, the optical system (1500) may be provided in a slim and compact structure and may have an appropriate size for optical performance in a temperature range from low to high temperature.

## [Mathematical Expression 23]

$$0.2 < CA\_max / (2*ImgH) < 0.6$$

In Mathematical Expression 23, CA_max is the clear aperture size (CA) of the lens face having the largest clear aperture size (CA) at room temperature (about 20°C) among the lens faces of the plurality of lenses (100, 200, 300) included in the optical system (1500).

Further, ImgH is a value that is twice the vertical distance of the optical axis OA from a 0 field region at the upper center of the image sensor (600) that overlaps with the optical axis (OA) to a 1.0 field region of the image sensor (600) at room temperature (about 20°C). In other words, ImgH is the total diagonal length (mm) of the image sensor (600) at room temperature (about 20°C).

If the optical system (1500) according to an embodiment satisfies the Mathematical Expression 23, the optical system (1500) may be provided in a slim and compact structure, and may have a suitable size for optical performance in a temperature range from low to high temperature.

## [Mathematical Expression 24]

$$1.5 < f / L1R1 < 2.5$$

In Mathematical Expression 24, f means an effective focal length (mm) of the optical system (1500) at room temperature (about 20°C). f may be an effective focal length (EFL).

Further, L1R1 is a radius of curvature of an object side (first surface S1) of the first lens (100) at room temperature (about 20°C).

If the optical system (1500) according to an embodiment satisfies the Mathematical Expression 24, the optical system (1500) may be provided in a TTL reduced structure.

## [Mathematical Expression 25]

$$0.5 < EPD / L1R1 < 1$$

In Mathematical Expression 25, EPD (Entrance Pupil Diameter) is the diameter of the entrance pupil.

Further, L1R1 is a radius of curvature of the object side (first surface S1) of the first lens (100) at room temperature (about 20°C).

If the optical system (1500) according to an embodiment satisfies the Mathematical Expression 25, the optical system (1500) may have an incident light control characteristic.

## [Mathematical Expression 26]

$$1 < |f1 / f2| < 1.5$$

In Mathematical Expression 26, f1 is the focal length (mm) of the first lens (100) at room temperature (about 20°C), and f2 is the focal length (mm) of the second lens (200) at room temperature (about 20°C).

When the optical system (1500) according to the second exemplary embodiment satisfies the Mathematical Expression 26, the first lens (100) and the second lens (200) may have appropriate refractive power for controlling the incoming light path, and the optical system (1500) may have improved resolution.

## [Mathematical Expression 27]

$$6mm < TTL < 7.5mm$$

In Mathematical Expression 27, TTL is the distance (mm) on the optical axis (OA) from the object side face (first surface S1) of the first lens (100) to the upper surface of the image sensor (600) at room temperature (about 20°C).

## [Mathematical Expression 28]

$$2.5mm < ImgH < 3.5mm$$

In Mathematical Expression 28, ImgH is twice the vertical distance of the optical axis (OA) at room temperature (about 20°C) from the 0-field region of the top-centered field of the image sensor (600) that overlaps the optical axis (OA) to the 1.0-field region of the image sensor (600). In other words, ImgH is the total diagonal length (in mm) of the image sensor (600) at room temperature (about 20°C).

## [Mathematical Expression 29]

$$1.5 < BFL < 2$$

In Mathematical Expression 29, BFL (back focal length) is the distance (mm) on the optical axis (OA) from the apex of the sensor side of the lens closest to the image sensor (600) to the upper surface of the image sensor (600) at room temperature (approximately 20°C).

## [Mathematical Expression 30]

$$4.5mm < f < 5.5mm$$

In Mathematical Expression 30, f means an effective focal length (mm) of the optical system (1500) at room temperature (about 20°C). F may be an effective focal length (EFL).

## [Mathematical Expression 31]

$$50degree < FOV < 80degree$$

In Mathematical Expression 31, FOV refers to the field of view (FOV) of the optical system (1500) in room temperature (about 20°C), low temperature (about -40°C), and high temperature (about 85°C) environments.

## [Mathematical Expression 32]

$$2 < TTL / CA\_max < 2.8$$

In Mathematical Expression 32, TTL is a distance (mm) on the optical axis (OA) from the object side face (first surface S1) of the first lens (100) to the upper surface of the image sensor (600) at room temperature (about 20°C).
Further, CA_max is the clear aperture size (CA) of the lens face having the largest clear aperture size (CA) at room temperature (about 20°C) from the lens faces of the plurality of lenses (100, 200, 300) included in the optical system (1500).
When the optical system (1500) according to an embodiment satisfies the Mathematical Expression 32, the optical system (1500) has good optical performance in the center and periphery of the field of view (FOV) and can be provided in a slim and compact structure.

## [Mathematical Expression 33]

$$2 < TTL / ImgH < 2.5$$

In Mathematical Expression 33, TTL is the distance (in mm) on the optical axis (OA) from the object side face (first surface S1) of the first lens (100) to the upper surface of the image sensor (600) at room temperature (about 20°C).
Further, ImgH is twice the vertical distance in the optical axis (OA) from a 0 field region centered on the top surface of the image sensor (600) that overlaps with the optical axis (OA) to a 1.0 field region of the image sensor (600) at room temperature (about 20°C). In other words, ImgH is the total diagonal length (mm) of the image sensor (600) at room temperature (about 20°C).

If the optical system (1500) according to an embodiment satisfies the Mathematical Expression 33, the optical system (1500) can have a back focal length (BFL) for applying a relatively large sized image sensor (600), such as a large image sensor (600) around 1 inch, and can have a smaller TTL, resulting in a high definition implementation and a slim structure.

[Mathematical Expression 34]

$$0.2 < BFL / ImgH < 0.7$$

In Mathematical Expression 34, BFL (back focal length) is the distance (mm) in the optical axis (OA) from the apex of the sensor side of the lens closest to the image sensor (600) to the upper surface of the image sensor (600) at room temperature (about 20°C).

Further, ImgH is twice the vertical distance in the optical axis (OA) from the 0 field region at the center of the top surface of the image sensor (600) that overlaps the optical axis (OA) to the 1.0 field region of the image sensor (600) at room temperature (about 20 °C). In other words, ImgH is the overall diagonal length (in mm) of the image sensor (600) at room temperature (about 20 °C).

If the optical system (1500) according to an embodiment satisfies the Mathematical Expression 34, the optical system (1500) can have a back focal length (BFL) for applying a relatively large size image sensor (600), such as a large image sensor (600) around 1 inch, and can minimize the distance between the last lens and the image sensor (600) to have good optical properties in the center and periphery of the field of view (FOV).

[Mathematical Expression 35]

$$3.5 < TTL / BFL < 4$$

In Mathematical Expression 35, TTL is the distance (mm) along the optical axis (OA) from the object side face (first surface S1) of the first lens (100) to the upper surface of the image sensor (600) at room temperature (about 20°C).

Further, the back focal length (BFL) is the distance (mm) in the optical axis (OA) from the apex of the sensor side of the lens closest to the image sensor (600) at room temperature (about 20°C) to the upper surface of the image sensor (600).

If the optical system (1500) according to an embodiment satisfies the Mathematical Expression 35, the optical system (1500) can be provided slim and compact while ensuring a BFL.

[Mathematical Expression 36]

$$0.5 < f / TTL < 1$$

In Mathematical Expression 36, f means an effective focal length (mm) of the optical system (1500) at room temperature (about 20°C). F may be an effective focal length (EFL).

Further, TTL is a distance (mm) on the optical axis (OA) from the object side face (first surface S1) of the first lens (100) to the upper surface of the image sensor (600) at room temperature (about 20°C).

If the optical system (1500) according to an embodiment satisfies the Mathematical Expression 36, the optical system (1500) may be provided slim and compact.

[Mathematical Expression 37]

$$2.5 < f / BFL < 3$$

In Mathematical Expression 37, f means an effective focal length (mm) of the optical system (1500) at room temperature (about 20°C). f may be an effective focal length (EFL).

Further, BFL (back focal length) is the distance (mm) on the optical axis (OA) from the apex of the sensor side of the lens closest to the image sensor (600) to the upper surface of the image sensor (600) at room temperature (about 20°C).

If the optical system (1500) according to an embodiment satisfies the Mathematical Expression 37, the optical system (1500) can have a set field of view, can have a suitable focal length, and can be provided slim and compact. In addition, the optical system (1500) may minimize the distance between the last lens and the image sensor (600), which may have good optical properties at the periphery of the field of view (FOV).

[Mathematical Expression 38]

$$1.3 < f / ImgH < 1.8$$

In Mathematical Expression 38, f means an effective focal length (mm) of the optical system (1500) at room temperature (about 20°C). F may be an effective focal length (EFL).

Further, ImgH is a value of twice the vertical distance of the optical axis OA from a 0 field region at the top center of the image sensor (600) overlapping the optical axis (OA) to a 1.0 field region of the image sensor (600) at room temperature (about 20°C). In other words, ImgH means the overall diagonal length (in mm) of the image sensor (600) at room temperature (about 20°C).

If the optical system (1500) according to an embodiment satisfies the Mathematical Expression 38, the optical system (1500) may employ a relatively large sized image sensor (600), such as a large image sensor (600) of 1 inch or larger, and may have improved aberration characteristics.

[Mathematical Expression 39]

$$2 < f/ EPD < 2.3$$

In Mathematical Expression 39, f means an effective focal length in mm of the optical system (1500) at room temperature (about 20°C). F may be the effective focal length (EFL). Also, EPD (Entrance Pupil Diameter) means the diameter of the entrance pupil.

[Mathematical Expression 40]

$$1 < TTL/f < 1.5$$

In Mathematical Expression 40, f means an effective focal length (mm) of the optical system (1500) at room temperature (about 20°C). F may be an effective focal length (EFL).

Further, TTL is a distance (mm) on the optical axis (OA) from the object side face (first surface S1) of the first lens (100) to the upper surface of the image sensor (600) at room temperature (about 20°C).

If the optical system (1500) according to an embodiment satisfies the Mathematical Expression 40, the optical system (1500) may be provided slim and compact.

[Mathematical Expression 41]

$$1.8 < Fno < 2.2$$

In Mathematical Expression 41, Fno refers to an F-number of the optical system.

If the optical system (1500) according to the embodiment satisfies the Mathematical Expression 41, it is possible to take pictures in a dark environment as in a bright environment, and in particular, it is possible to detect near infrared ray light.

[Mathematical Expression 42]

$$v2 < v1$$

In Mathematical Expression 42, v1 is the Abbe number of the first lens (100) and v2 is the Abbe number of the

second lens (200).

## [Mathematical Expression 43]

$$1.5 < n1 < 1.6$$

In Mathematical Expression 43, n1 is the refractive index for light in the d line (587.6 nm) wavelength band of the first lens (100).

## [Mathematical Expression 44]

$$50 < v1 < 60$$

In Mathematical Expression 44, v1 means Abbe number of first lens.

## [Mathematical Expression 45]

$$10 < v2 < 20$$

In Mathematical Expression 45, v2 means Abbe number of second lens.

## [Mathematical Expression 46]

$$Z = \frac{cY^2}{1 + \sqrt{1 - (1+K)c^2Y^2}} + AY^4 + BY^6 + CY^8 + DY^{10} + EY^{12} + FY^{14} + \cdots$$

In Mathematical Expression 46, Z is Sag, which can mean the distance in the direction of the optical axis from any location on the aspheric surface to the apex of the aspheric surface.

Further, Y may mean the distance in the direction perpendicular to the optical axis from any position on the aspheric surface to the optical axis.

Further, c may mean the curvature of the lens, and K may mean the Koenig constant.

Further, A, B, C, D, ... may mean an aspheric constant.

In other words, in the optical system (1500) according to an embodiment, the first lens (100), the second lens (200), and the third lens (300) may be provided with the same material and may satisfy at least one of the mathematical expressions 1 or 46 described above. Accordingly, the optical system (1500) may prevent or minimize the change in optical properties with temperature, and may have improved optical properties at various temperatures.

Further, the optical system (1500) may have improved optical properties by satisfying at least one of the mathematical expressions of 1 to 46, which may prevent or minimize changes in distortion and aberration characteristics at various temperatures.

Table 31 below shows the entries of the above Mathematical Expressions in the optical system (1500) according to the second exemplary embodiment, such as focal lengths of the first to third lenses (100, 200, 300) at room temperature (about 20°C), total track length (TTL), back focal length (BFL), F-value, ImgH, effective focal length (EFL) values, and the like by temperature of the optical system (1500).

Table 32 below shows the resulting values for Mathematical Expression 1 to Mathematical Expression 45 above in the optical system (1500) according to the second exemplary embodiment.

[Table 31]

|  | Second exemplary embodiment |
|---|---|
| D1_CT | 1.3308 mm |
| D2_CT | 1.6022 mm |

(continued)

|  | Second exemplary embodiment |
|---|---|
| D3_CT | 0.9100 mm |
| D1_ET | 0.9000 mm |
| D2_ET | 1.2324 mm |
| D3_ET | 1.1411 mm |
| f1 (room temperature(about 20°C)) | 4.6057 mm |
| f2 (room temperature(about 20°C)) | 3.8431 mm |
| f3 (room temperature(about 20°C)) | -3.7280 mm |
| EPD (room temperature(about 20°C)) | 2.3773 mm |
| TD(L1S1~L3S2) (room temperature(about 20°C)) | 5.0865 mm |
| SD(Stop~L3S2) (room temperature(about 20°C)) | 3.7157 mm |
| EFL (room temperature(about 20°C)) | 5.093 mm |
| EFL (low temperature(-40°C)) | 5.005 mm |
| EFL (high temperature(85°C)) | 5.190 mm |
| BFL (room temperature(about 20°C)) | 1.8328 mm |
| BFL (low temperature(-40°C)) | 1.8262 mm |
| BFL (high temperature(85°C)) | 1.8401 mm |
| Fno (room temperature(about 20°C)) | 2.16 |
| Fno (low temperature(-40°C)) | 2.12 |
| Fno (high temperature(85°C)) | 2.20 |
| TTL (room temperature(about 20°C)) | 6.91824 mm |
| TTL (low temperature(-40°C)) | 6.8972 mm |
| TTL (high temperature(85°C)) | 6.9411 mm |
| FOV (room temperature(about 20°C)) | 60.79 degree |
| FOV (low temperature(-40°C)) | 60.89 degree |
| FOV (high temperature(85°C)) | 60.68 degree |

[Table 32]

|  | Mathematical Expressions | Second exemplary embodiment |
|---|---|---|
| Mathematical Expression 1 | 1.2 < L1_CT / L1_ET < 1.6 | 1.478 |
| Mathematical Expression 2 | 1 < L3_ET / L3_CT < 1.5 | 1.254 |
| Mathematical Expression 3 | 1.6 < n2 <1.8 | 1.671 |
| Mathematical Expression 4 | 1.2 < L3S2_max_sag to Sensor < 1.8 | 1.500 |
| Mathematical Expression 5 | 1 < BFL / L3S2_max_sag to Sensor < 1.5 | 1.222 |
| Mathematical Expression 6 | 30 < |L3S2_max slope| < 35 | 32.600 |
| Mathematical Expression 7 | 6 < d23_max / d23_CT < 7 | 6.808 |
| Mathematical Expression 8 | 1 < L3_ET / L3_CT < 1.5 | 1.254 |
| Mathematical Expression 9 | 1 < L2_CT / L 1_CT < 1.5 | 1.204 |

(continued)

|  | Mathematical Expressions | Second exemplary embodiment |
|---|---|---|
| Mathematical Expression 10 | 1.2 < L2R1 / L2R2 < 1.7 | 1.513 |
| Mathematical Expression 11 | 1 < CA_L1S1 / CA_ L1S2 < 1.5 | 1.350 |
| Mathematical Expression 12 | 1.2 < CA_L2S2 / CA_L2S1 < 1.7 | 1.496 |
| Mathematical Expression 13 | 6 < d23_ET / d23_CT < 7 | 6.808 |
| Mathematical Expression 14 | 1 < L_CT_Max / Air_Max < 2 | 1.246 |
| Mathematical Expression 15 | 2.5 < ∑L_CT / ∑Air_CT < 3.5 | 3.090 |
| Mathematical Expression 16 | 20 < ∑Abb / ∑Index < 30 | 27.425 |
| Mathematical Expression 17 | 2 < \|Max_distoriton\| < 3 | 2.500 |
| Mathematical Expression 18 | 0.2 < Air_Edge_Max / L_CT_Max < 0.7 | 0.514 |
| Mathematical Expression 19 | 1 < CA_L1S1/ CA_min < 1.5 | 1.350 |
| Mathematical Expression 20 | 2 < CA_max / CA_min < 3 | 2.738 |
| Mathematical Expression 21 | 1.4 < CA_max / CA_Aver < 2 | 1.673 |
| Mathematical Expression 22 | 0.2 < CA_min / CA_Aver < 0.8 | 0.611 |
| Mathematical Expression 23 | 0.2 < CA_max / (2*ImgH) < 0.6 | 0.443 |
| Mathematical Expression 24 | 1.5 < f / L1R1 < 2.5 | 2.127 |
| Mathematical Expression 25 | 0.5 < EPD / L1R1 < 1 | 0.851 |
| Mathematical Expression 26 | 1 < \|f1 / f2\| < 1.5 | 1.198 |
| Mathematical Expression 27 | 6 < TTL < 7.5 | 6.920 |
| Mathematical Expression 28 | 2.5 < ImgH < 3.5 | 3.090 |
| Mathematical Expression 29 | 1.5 < BFL < 2 | 1.833 |
| Mathematical Expression 30 | 4.5 < f < 5.5 | 5.100 |
| Mathematical Expression 31 | 50 < FOV < 80 | 62.000 |
| Mathematical Expression 32 | 2 < TTL / CA_max < 2.8 | 2.527 |
| Mathematical Expression 33 | 2 < TTL / ImgH < 2.5 | 2.239 |
| Mathematical Expression 34 | 0.2 < BFL / ImgH < 0.7 | 0.593 |
| Mathematical Expression 35 | 3.5 < TTL / BFL < 4 | 3.774 |
| Mathematical Expression 36 | 0.5 < f / TTL < 1 | 0.737 |
| Mathematical Expression 37 | 2.5 < f / BFL < 3 | 2.782 |
| Mathematical Expression 38 | 1.3 < f / ImgH < 1.8 | 1.650 |
| Mathematical Expression 39 | 2 < f / EPD < 2.3 | 2.145 |
| Mathematical Expression 40 | 1 < TTL/f < 1.5 | 1.357 |
| Mathematical Expression 41 | 2 < Fno < 2.3 | 2.12 |
| Mathematical Expression 42 | v2 < v1 | 만족 |
| Mathematical Expression 43 | 1.5 < n1 < 1.6 | 1.5350 |
| Mathematical Expression 44 | 50 < v1 < 60 | 55.7 |
| Mathematical Expression 45 | 10 < v2 < 20 | 19.2 |

Referring to Table 32, it can be seen that the optical system (1500) according to this second exemplary embodiment satisfies at least one of Mathematical Expression 1 to Mathematical Expression 45. More specifically, it can be seen that the optical system (1500) according to the second exemplary embodiment satisfies all the Mathematical Expressions from 1 to 45.

Accordingly, the optical system (1500) according to the second exemplary embodiment may have a field of view of within 60 degrees (60±1 degrees) over a temperature range of low temperature (-40°C) to high temperature (85°C), and may have optical properties as shown in FIGS. 5 to 13.

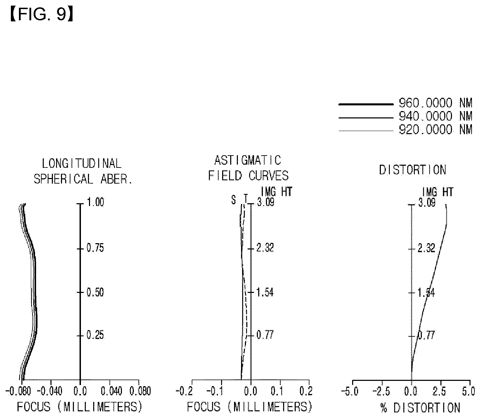

FIGS. 9, 10, and 11 are graphs of aberrations of the optical system (1500) in low temperature (-40°C), room temperature (20°C), and high temperature (85°C) environments, respectively, measuring, from left to right, Longitudinal Spherical Aberration, Astigmatic Field Curves, and Distortion. In FIGS. 9, 10, and 12, the X-axis may represent the focal length (mm) or distortion (%), and the Y-axis may represent the height of the image. Further, the graphs for spherical aberration are graphs for light in the wavelength bands of about 920 nm, about 940 nm, and about 960 nm, and the graphs for Astigmatic Field Curves and distortion aberration are graphs for light in the wavelength band of 940 nm.

In the aberration diagrams of FIGS. 9, 10 and 11, it can be interpreted that the closer each curve is to the Y-axis, the better the aberration correction. Referring to FIGS. 9, 10 and 11, it can be seen that the optical system (1500) according to the second exemplary embodiment has measured values close to the Y-axis in almost all areas.

This means that the optical system (1500) according to the second embodiment can maintain good optical properties over a wide range of temperatures. More specifically, the optical system (1500) may include a first lens (100) made of the same plastic material as the second lens (200) and the third lens (300).

In this case, the first to third lenses (100, 200, 300) according to the second embodiment may be provided with a set refractive index, shape, thickness, etc. to mutually compensate for changes in focal length caused by changes in refractive index that vary with temperature. Thus, the optical system 1500 can prevent or minimize changes in optical properties in a temperature range from low temperature (-40°C) to high temperature (85°C), and can maintain improved optical properties.

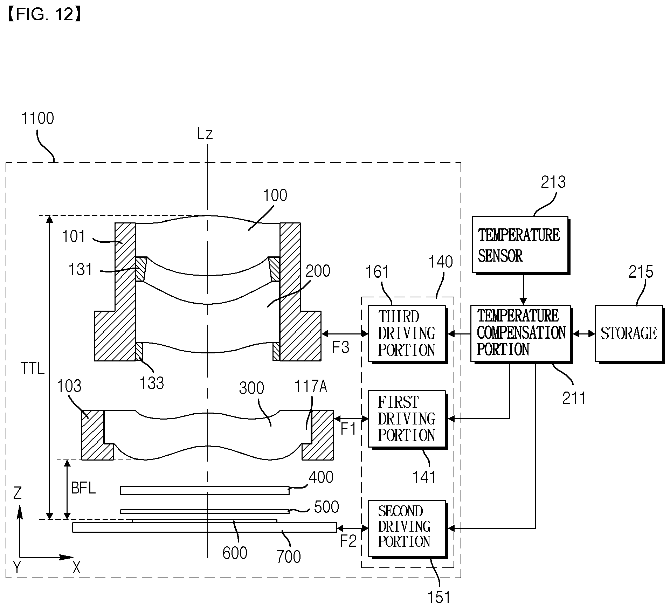

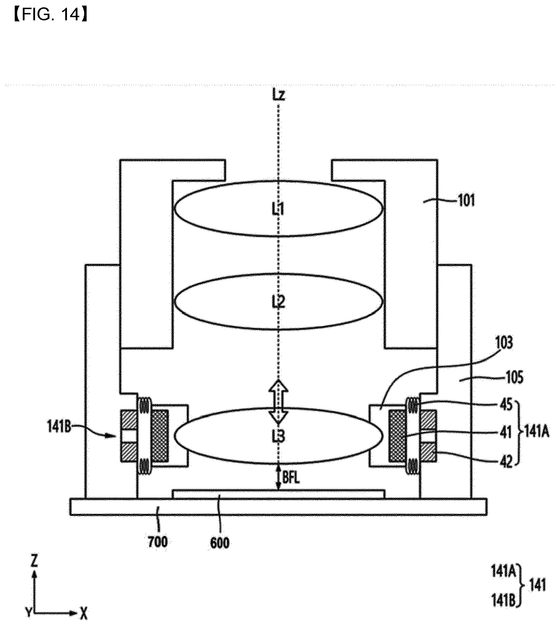

Referring now to FIGS. 12 to 18, a camera module that adjusts a distance between a lens and a lens or a distance between a lens and an image sensor in response to temperature changes in an optical system of an embodiment is described below. The camera module according to this embodiment can minimize performance changes due to temperature.

Referring to Figure 12, a camera system according to an exemplary embodiment of the present invention may include a camera module (1100), a temperature compensation portion (211) that provides a driving signal to the camera module (1100), a temperature sensor (213) that detects the ambient temperature of the camera module (1100), and a storage (215) in which a compensation rate based on temperature changes is stored.

A driving portion (140) may be implemented as a first driving portion (141) that moves any one of the lenses of a second lens holder (103) in the optical axis (Lz) direction. As another example, the driving portion (140) may be implemented as a second driving portion (151) that moves a main substrate (700) in the optical axis (Lz) direction.

As another example, the driving portion (140) may be implemented as a third driving portion (161) that moves any one of the lenses of the first lens holder (101) in the optical axis (Lz) direction. The driving portion (140) may be implemented as a single driving portion, but as another example, it may be implemented as two or more driving portions, for example, as first and second driving portions (141,151), as first and third driving portions (141,161), or as second and third driving portions (151,161).

An actuator may be a driving by way of voice coil motor (VCM) having a magnet and coil, and may further include a support member to support it, and may have a yoke and/or Hall sensor disposed on the outside of the magnet.

The camera module (1100) may include a plurality of lenses (100, 200, 300) stacked along the optical axis (Lz) from the object side towards the sensor side, such as a first lens (100), a second lens (200), and a third lens (300). The first lens (100) may be the lens closest to the object side or a first lens. The third lens (300) may be defined as the lens closest to the sensor or the last lens.

The camera module (1100) may include only plastic lenses. When a plastic lens is used in a vehicle, the cost may be lower compared to a glass lens, and the incoming and outgoing surfaces may be aspherical to facilitate control of the light path. Here, the coefficient of thermal expansion (CTE) of the plastic material is more than five times higher than that of the glass material, and the value of the change in refractive index as a function of temperature may be more than ten times lower for the plastic material than for the glass material. In the case of a large percentage of expansion and contraction with temperature, such as a plastic lens, the plastic lens (111,112) may expand or contract with a change in temperature, such as in (A), where the object-side face is convex and/or the sensor-side face is concave, and may expand in the object-side direction, as shown in (B), where the object-side face is concave and/or the sensor-side face is convex, and may expand in the sensor-side direction, as shown in (A). Such lenses (111,112) may vary in position or optical axis (Lz) height between the incoming and outgoing faces. Accordingly, the lenses (111,112) may affect their optical properties as the temperature changes.

The first lens holder (101) may be made of plastic or metal for heat dissipation efficiency. The second lens holder (103) may be made of plastic or metal for heat dissipation efficiency. If the lens holders (101, 103) are metal, they may improve the heat dissipation of the camera module (1100), or if they are made of the same material as the plastic lens, they may reduce the difference in coefficient of thermal expansion. The metal material may be selected from, for example, Al, Ag, or Cu materials, and may be Al or an Al alloy. The surfaces of the first and second lens holders (101, 103) may be coated or applied with a hydrophilic material. In exemplary embodiments of the present invention, the material of the second lens holder (103) may be metal to compensate for BFL

Each of the lenses (100, 200, 300) may include an effective region having a clear aperture through which light is incident and a flange having a non- effective region outside the effective area. The non-effective region may be an area where light is blocked by the light shields (131,133). The flange may extend circumferentially about the optical axis (Lz) in the effective region of the lens (100,200,300). At least one of the lenses (100,200,300) may be provided without a flange or with a relatively short length. The third lens (300) may have a flange (117A) on an outer periphery coupled to an inner side of the second lens holder (103).

The temperature sensor (213) may detect an ambient temperature of the camera module (1100). The detected temperature can detect a temperature inside or outside of the camera module (1100), and can range from -50°C to 125°C. The camera module (1100) may be applied to a mobile body, such as a vehicle, airplane, ship, or mobile device, and in the case of a vehicle, for example, the temperature may be subject to large temperature deviations due to the external environment. The reference temperature may be a temperature within the vehicle.

The temperature compensation portion (211) controls the driving mode of the driving portion(s) based on the temperature detected from the temperature sensor (213). The storage (215) may store the detected temperature and the temperature compensation rate by being matched therebetween.

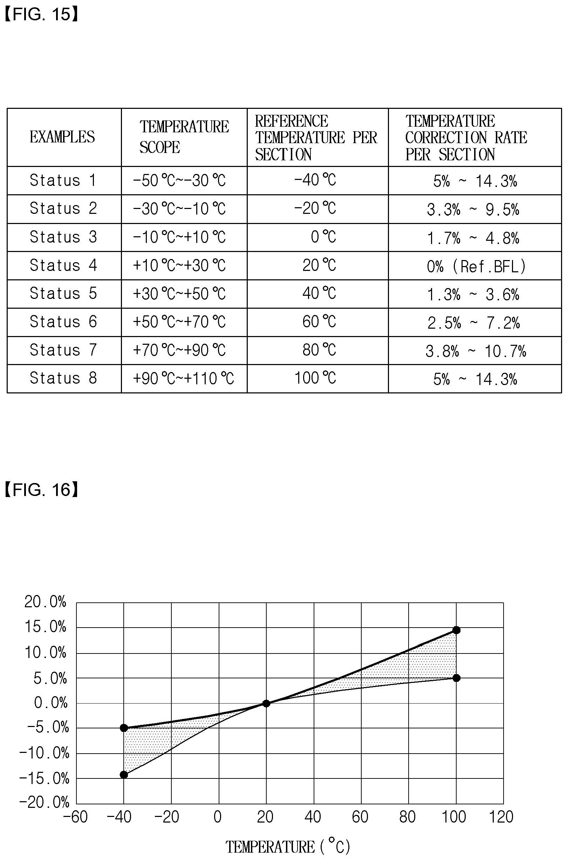

For example, as shown in FIG. 15, the temperature compensation rate per section may be set to a first mode (Status 1-3) to compensate when the temperature is lower than the reference temperature, and a second mode (Status 5-8) to compensate when the temperature is higher than the reference temperature, based on a reference temperature. The reference temperature may be a room temperature, for example, in the range of 10°C to 30°C or 15 °C to 25°C, preferably in the range of 20°C to ±10°C. The first mode (Status 1-3) is a temperature lower than the reference (Ref) temperature, wherein the per-section (sectional) temperature can be divided into at least three sections ranging from 10°C to -50°C, wherein the first section (Status 1) can range from 10°C to -10°C, the second section (Status 2) can range from -10°C to -30°C, and the third section (Status 3) can range from -30°C to -50°C. The reference temperature for each section in Status 1-3 may be 0 degrees, -20 degrees, and -40 degrees, and the deviation of the section temperature may be ±10 degrees. The second mode is a temperature higher than the reference (Ref) temperature, wherein the section(al) temperature may be divided into at least four sections ranging from 30°C to 100°C, wherein the section temperature may range from 30°C to 50°C, wherein the first section (Status 5) may range from 50°C to 70°C, wherein the second section (Status 6) may range from 50°C to 70°C, wherein the third section (Status 7) may range from 70°C to 90°C, and wherein the fourth section (Status 8) may range from 90°C to 110°C. The section-specific (per section) reference temperatures for Statuses 1 to 4 (Status 5-8) may be 40 degrees, 60 degrees, 80 degrees, and 100 degrees, and the deviation of the section-specific temperatures may be ±10 degrees.

In another example of the invention, the temperature correction rate per status can be calibrated by the average amount of temperature change in each status 1-8. For example, the temperature compensation rate can be set as the average value of the temperature compensation rate of 10°C and the temperature compensation rate of - 10°C in the first status 1, which is below the reference temperature, and in this way the average temperature compensation rate of each of the second and third statuses below the reference temperature can be set. Furthermore, in the first section (Status 5) above the reference temperature, the temperature correction rate can be set as the average value of the temperature correction rate of 30°C and the temperature correction rate of 50°C, and in this way, the temperature correction rate of each of the second to fourth sections above the reference temperature can be set as the average temperature correction rate.

In another example of the invention, in calculating the average temperature correction rate, each interval below the reference may be weighted more heavily towards correction rates at relatively lower temperatures and each interval above the reference may be weighted more heavily towards correction rates at relatively higher temperatures. For example, in Status 1 below the reference temperature, a temperature correction rate of 10°C may be weighted 30%, a temperature correction rate of -10°C may be weighted 70%, and a temperature correction rate may be set as the average of these values, and in this way, a weighted average temperature correction rate may be set for each of Status 2 and 3 below the reference temperature. In addition, the temperature correction rate of the first section (Status 5) above the reference temperature can be set by weighting the temperature correction rate of 30°C by 30% and the temperature correction rate of 50°C by 70%, and the temperature correction rate of that section can be set by the average value of these weights, and in this way, the average temperature correction rate of each of the second to fourth sections above the reference temperature can be corrected.

Based on the detected temperature, the temperature compensation portion (211) may determine a driving mode with a matching temperature by comparing the detected temperature to a reference mode stored in the storage (215), a status 1-3 temperature compensation rate for the first mode, and a status 1-3 temperature compensation rate for the second mode. Alternatively, the temperature compensation portion (211) may control the position of the BFL based on the average temperature compensation rate for each section.

The temperature compensation portion (211) may control the at least one driving portion (141, 151, 161) according to the driving mode. For example, when the first driving portion (141) is driven by the first control signal F1, the optical axis distance (Lz) between the sensor side of the third lens (300) and the image sensor (600), i.e., the back focal length (BFL), can be increased or decreased. Preferably, as the third lens (300) contracts or expands with temperature changes, the reference BFL may be reduced or increased.

In either section, the third lens (300) may contract, thereby increasing the BFL above the reference value, and the temperature compensation portion (211) may control the driving portions (141,151) to increase the BFL according to a temperature compensation rate of the BFL. Conversely, the temperature compensation portion (211) may control the first driving portions (141,151) to decrease the BFL in accordance with the temperature compensation rate of the BFL by the temperature compensation portion (211) when the detected temperature is in one of the sections of the second mode that is higher than the reference temperature, such that the third lens (300) may expand and the BFL may decrease from the reference value.

The first driving portion (141) can move the third lens (300) up or down in the optical axis (Lz) direction when the first control signal (F1) is inputted. The second driving portion (151) can move the main substrate (700) up or down in the optical axis (Lz) direction when the second control signal (F2) is inputted. The third driving portion (161) can move the first lens holder (101) or any of the lenses (100, 200, 300) thereinside up or down in the optical axis (Lz) direction when the third control signal (F3) is inputted. Here, when the third driving portion (161) is driven, it can adjust the change in the total track length (TTL) of the camera module (1100) according to a change in temperature, or reduce or increase the TTL according to a change in the BFL. TTL is the optical axis (Lz) distance from the object side face of the first lens (100) to the image sensor (600).

As shown in FIG. 16, an exemplary embodiment of the present invention may drive the first or second driving portions (141,151) to increase or decrease the BFL in response to a change in temperature or a change in BFL of the last lens (300) within a region connecting a point of at least -5% when the temperature is as low as -40°C and a point of at least -14.3% when the temperature is as high as 100°C, and maintain a constant reference BFL. Thus, changes in the optical performance of the camera module due to temperature changes can be suppressed.

When a control signal is inputted based on the temperature detected by the temperature compensation portion (211), first and second actuators (141A,141B) are moved up or down along the optical axis (Lz) with the second lens holder (103) by electromagnetic influence between the coil (42) and the magnets (41). At this time, the spring member (45) supports the movement of the second lens holder (103) in the optical axis (Lz) direction, and the optical axis distance (BFL) between the lens (L3) of the second lens holder (103) and the image sensor (600) increases or decreases. Thus, the distance (BFL) between the last lens (L3) of the second lens holder (103) and the image sensor (600) may remain constant even if the last lens (L3) expands or contracts due to temperature. Accordingly, the camera module (1100) can suppress changes in optical performance even when the temperature is varied by configuration.

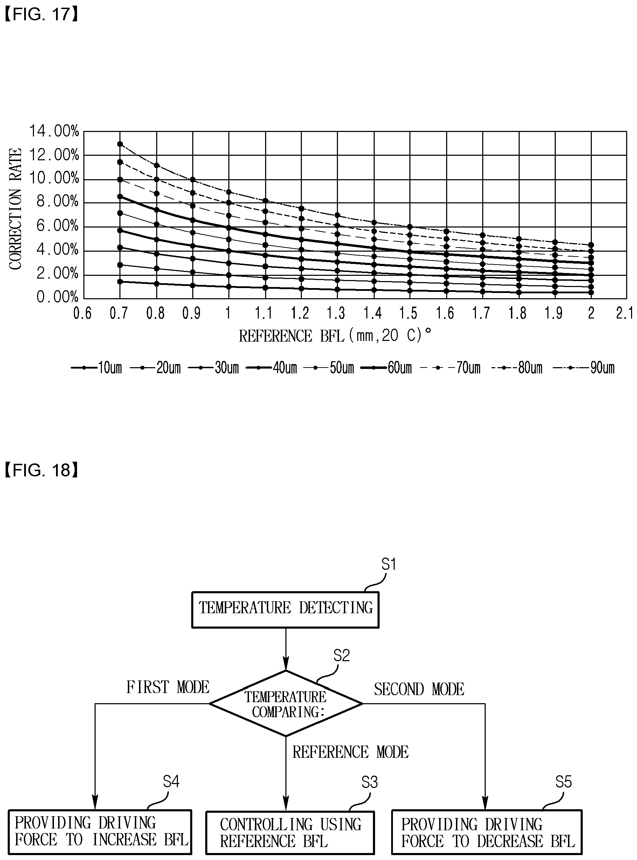

Referring to FIG. 18, in the BFL compensation method by the temperature compensation portion (211), the ambient temperature of the camera module (1100) is detected by the temperature sensor (213) (S1), and the detected ambient temperature is compared and matched with the temperature compensation table stored in the storage (215) (S2). At this time, if the ambient temperature is in the reference mode, it is controlled to be maintained at the reference BFL (S3); if the first temperature is lower than the reference temperature, the BFL is made to be increased (S4) by providing a driving force to first or the second driving portions (141, 151) of camera module; and if the second temperature is higher than the reference temperature, the BFL is made to be decreased (S5) by providing a driving force to the first or second driving portions (141, 151) of camera module.

One having ordinary knowledge in the technical field to which the present embodiments relate will understand that variations may be implemented without departing from the essential characteristics of the materials described above. The disclosed methods are therefore to be considered from an illustrative and not a limiting point of view. The scope of the invention is shown in the claims of the patent and not in the foregoing description, and all differences within the scope of the claims are to be construed as being included in the invention.

**Claims**

1. An optical system, comprising:

    a first lens having positive (+) refractive power;
    a second lens; and
    a third lens having a negative (+) refractive power, wherein:

the first to third lenses are successively arranged from an object side to an image side; the first to third lenses are made of a plastic material; and

the center thickness of each of the first to third lenses in the optical-axis direction is greater than 0.9mm.

2. The optical system of claim 1, further comprising:

a first lens having a positive (+) refractive power;

a second lens; and

a third lens having a positive (+) refractive power, wherein the first to third lenses are arranged sequentially from the object side to the upper side; and satisfying the following conditional (mathematical) expression:

<conditional expression>

100 degrees < |L3S2_max slope angle| < 120 degrees,

wherein, L3S2_max slope angle means a maximum value of the angles that a tangent line tangential to the image side surface of the third lens makes with a line perpendicular to the optical axis.

3. The optical system of claim 1 or 2, wherein the refractive index of the first lens is greater than the refractive index of the second lens.

4. The optical system of claim 1 or 2, which satisfies the following conditional expression:

<conditional expression>

6mm < TTL < 8mm,

wherein, TTL means the distance along the optical axis from the object side surface of the first lens to an image surface of the image sensor.

5. The optical system of claim 1 or 2, which satisfies the following conditional expression:

<conditional expression>

1.6 < n1 < 1.8,

wherein, n1 means the refractive index of the first lens.

6. The optical system of claim 1 or 2, which satisfies the following conditional expression:

<conditional expression>

1.8 < Fno < 2.2,

wherein, Fno means the F-number of the optical system.

7. The optical system of claim 1 or 2, which satisfies the following conditional expression:

<conditional expression>

v1 < v2,

wherein, v1 means the Abbe number of the first lens, and v2 means the Abbe number of the second lens.

8. The optical system of claim 1 or 2, which satisfies the following conditional expression:

<Conditional expression>

25 degrees < FOV < 35 degrees,

wherein, FOV means the field of view of the optical system.

9. The optical system of claim 1 or 2, which satisfies the following conditional expression:

<conditional expression>

$10 < v1 < 20$,

wherein, v1 means the Abbe number of the first lens.

10. The optical system of claim 1 or 2, further: comprising an image sensor; and satisfying the following conditional expression:

< conditional expression>

2 mm < ImgH < 4 mm,

wherein, ImgH means the overall diagonal length of the image sensor in mm.

【FIG. 1】

【FIG. 2】

【FIG. 3】

【FIG. 4】

【FIG. 5】

960.0000 NM
940.0000 NM
920.0000 NM

LONGITUDINAL
SPHERICAL ABER.

1.00

0.75

0.50

0.25

-0.08  -0.04   0.0   0.04  0.08
FOCUS (MILLIMETERS)

ASTIGMATIC
FIELD CURVES
IMG HT
T   S   3.09

2.32

1.54

0.77

-0.50  -0.25   0.0   0.25  0.50
FOCUS (MILLIMETERS)

DISTORTION
IMG HT
3.09

2.32

1.54

0.77

-5.0   -2.5   0.0   2.5   5.0
% DISTORTION

【FIG. 6】

【FIG. 7】

960.0000 NM
940.0000 NM
920.0000 NM

LONGITUDINAL
SPHERICAL ABER.

1.00

0.75

0.50

0.25

-0.050 -0.025  0.0  0.025 0.050
FOCUS (MILLIMETERS)

ASTIGMATIC
FIELD CURVES

IMG HT
S  3.09 T

2.32

1.54

0.77

-0.2  -0.1  0.0  0.1  0.2
FOCUS (MILLIMETERS)

DISTORTION

IMG HT
3.09

2.32

1.54

0.77

-5.0  -2.5  0.0  2.5  5.0
% DISTORTION

EP 4 446 792 A1

【FIG. 8】

60

【FIG. 9】

960.0000 NM
940.0000 NM
920.0000 NM

LONGITUDINAL
SPHERICAL ABER.

ASTIGMATIC
FIELD CURVES

DISTORTION

IMG HT
3.09

2.32

1.54

0.77

-0.080 -0.040 0.0 0.040 0.080
FOCUS (MILLIMETERS)

1.00

0.75

0.50

0.25

S T IMG HT
3.09

2.32

1.54

0.77

-0.2 -0.1 0.0 0.1 0.2
FOCUS (MILLIMETERS)

IMG HT
3.09

2.32

1.54

0.77

-5.0 -2.5 0.0 2.5 5.0
% DISTORTION

【FIG. 10】

LONGITUDINAL
SPHERICAL ABER.

ASTIGMATIC
FIELD CURVES

DISTORTION

960.0000 NM
940.0000 NM
920.0000 NM

【FIG. 11】

960.0000 NM
940.0000 NM
920.0000 NM

LONGITUDINAL
SPHERICAL ABER.

ASTIGMATIC
FIELD CURVES

DISTORTION

FOCUS (MILLIMETERS)

FOCUS (MILLIMETERS)

% DISTORTION

【FIG. 12】

【FIG. 13】

(A)

(B)

【FIG. 14】

【FIG. 15】

| EXAMPLES | TEMPERATURE SCOPE | REFERENCE TEMPERATURE PER SECTION | TEMPERATURE CORRECTION RATE PER SECTION |
|---|---|---|---|
| Status 1 | −50℃~−30℃ | −40℃ | 5% ~ 14.3% |
| Status 2 | −30℃~−10℃ | −20℃ | 3.3% ~ 9.5% |
| Status 3 | −10℃~+10℃ | 0℃ | 1.7% ~ 4.8% |
| Status 4 | +10℃~+30℃ | 20℃ | 0% (Ref.BFL) |
| Status 5 | +30℃~+50℃ | 40℃ | 1.3% ~ 3.6% |
| Status 6 | +50℃~+70℃ | 60℃ | 2.5% ~ 7.2% |
| Status 7 | +70℃~+90℃ | 80℃ | 3.8% ~ 10.7% |
| Status 8 | +90℃~+110℃ | 100℃ | 5% ~ 14.3% |

【FIG. 16】

【FIG. 17】

【FIG. 18】

【FIG. 19】

## INTERNATIONAL SEARCH REPORT

International application No.

**PCT/KR2022/019717**

| A. | CLASSIFICATION OF SUBJECT MATTER |
|---|---|

**G02B 9/12**(2006.01)i; **G02B 13/00**(2006.01)i; **G03B 17/12**(2006.01)i; **H04N 23/00**(2023.01)i; **B60R 11/04**(2006.01)i

According to International Patent Classification (IPC) or to both national classification and IPC

| B. | FIELDS SEARCHED |
|---|---|

Minimum documentation searched (classification system followed by classification symbols)

G02B 9/12(2006.01); G02B 13/00(2006.01); G02B 13/14(2006.01); G02B 13/18(2006.01); G02B 3/02(2006.01); G02B 9/00(2006.01); G02B 9/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제3 렌즈(third lens), 두께(thickness), 차량용 카메라(vehicle camera), 온도 (temperature)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2004-240063 A (FUJI PHOTO OPTICAL CO., LTD.) 26 August 2004 (2004-08-26)<br>See paragraph [0020], claim 1 and figures 1 and 3. | 1,2,4 |
| X | JP 2004-163851 A (FUJI PHOTO OPTICAL CO., LTD.) 10 June 2004 (2004-06-10)<br>See paragraph [0021], table 1, claim 1 and figure 1. | 1,3,5,7 |
| X | JP 05-341182 A (OLYMPUS OPTICAL CO., LTD.) 24 December 1993 (1993-12-24)<br>See paragraph [0029], claim 1 and figure 1. | 1,6 |
| X | JP 2018-084704 A (KONICA MINOLTA INC.) 31 May 2018 (2018-05-31)<br>See paragraph [0095], tables 13, 15 and 16 and figure 11. | 1,8,10 |
| A | US 9733452 B2 (NEWMAX TECHNOLOGY CO., LTD.) 15 August 2017 (2017-08-15)<br>See claim 1 and figure 1A. | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 March 2023** | **14 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/019717**

| Patent document cited in search report | | | Publication date (day/month/year) | Patent family member(s) | | | Publication date (day/month/year) |
|---|---|---|---|---|---|---|---|
| JP | 2004-240063 | A | 26 August 2004 | US | 2004-0150893 | A1 | 05 August 2004 |
| | | | | US | 6977779 | B2 | 20 December 2005 |
| JP | 2004-163851 | A | 10 June 2004 | JP | 3725520 | B2 | 14 December 2005 |
| | | | | US | 2004-0061953 | A1 | 01 April 2004 |
| | | | | US | 6804067 | B2 | 12 October 2004 |
| JP | 05-341182 | A | 24 December 1993 | JP | 05-134172 | A | 28 May 1993 |
| | | | | JP | 3264978 | B2 | 11 March 2002 |
| | | | | JP | 3389255 | B2 | 24 March 2003 |
| | | | | US | 5268791 | A | 07 December 1993 |
| JP | 2018-084704 | A | 31 May 2018 | JP | 6718147 | B2 | 08 July 2020 |
| US | 9733452 | B2 | 15 August 2017 | US | 2017-0192204 | A1 | 06 July 2017 |

Form PCT/ISA/210 (patent family annex) (July 2022)